# EUROPEAN PATENT APPLICATION

(11) **EP 4 503 728 A1**
(43) Date of publication of application: **05.02.2025**
(21) Application number: 23774496.6
(22) Date of filing: 07.03.2023
(51) Int. Cl.: H04W 28/16, H04B 7/024, H04W 16/28, H04W 72/0457, H04W 76/20

(54) **COMMUNICATION CONTROL DEVICE AND COMMUNICATION CONTROL METHOD**

(30) Priority: 25.03.2022 JP 2022049748
(71) Applicant: Sony Group Corporation, Tokyo 108-0075 (JP)
(72) Inventor: AIO Kosuke, Tokyo 108-0075 (JP); TANAKA Ken, 70327 Stuttgart (DE); SUGAYA Shigeru, Tokyo 108-0075 (JP)
(74) Representative: D Young & Co LLP
(86) International application number: PCT/JP2023/008453
(87) International publication number: WO 2023/181897

(57) **Abstract**

The present technology relates to a communication control device and a communication control method capable of improving a system throughput at a time of coordinated transmission.

The communication control device controls processing of receiving signals to be subjected to coordinated transmission by a plurality of communication devices, and processing related to communication on the basis of a training signal prepared for each piece of coordinated transmission information that is information regarding the coordinated transmission. The present technology can be applied to a wireless communication system.

## Description

### TECHNICAL FIELD

The present technology relates to a communication control device and a communication control method, and more particularly relates to a communication control device and a communication control method capable of improving a system throughput at the time of coordinated transmission.

### BACKGROUND ART

In recent years, environments in which a plurality of access points (hereinafter referred to as APs) of a wireless local area network (LAN) is installed in stadiums and homes have increased, and technologies aiming at improvement of a system throughput and improvement of reliability by coordination between APs have attracted attention.

For example, Joint Transmission (Joint Tx or JTX), which is one of coordination schemes, is a technique in which a plurality of APs performs coordinated transmission (hereinafter, also referred to as coordinated transmission) to a common wireless terminal (Station, hereinafter referred to as STA) using a multi input multi output (MIMO) technique. By performing the Joint Tx, it is possible to form a highly dimensional beam without increasing the number of antennas provided in one AP.

Furthermore, Coordinated Beamforming (C-BF) disclosed as another coordination scheme is a technology in which each terminal forms a beam so as to suppress an interference signal to an interfered terminal. By performing the C-BF, it is possible to simultaneously transmit a plurality of terminals without excessively deteriorating communication quality.

In any coordination scheme, the AP needs to perform arithmetic processing on a transmission signal radiated from each antenna and perform appropriate beam forming. A vector value used for this arithmetic processing is called a transmission weight.

Although the number of dimensions of the transmission weight (that is, the number of transmission antennas to which the transmission weight is applied) is different between the Joint Tx and the C-BF, there is no difference in that the transmission weight is determined so that the interference signal does not reach other terminals. When the interference signal does not reach another terminal, it is a state where "transmission weight and channel are orthogonal". That is, the AP is required to determine a transmission weight orthogonal to a channel with the interference destination STA.

Several methods are considered as Sounding processing that is processing of estimating a channel between AP and STA. However, even if the Sounding processing is performed once and the transmission weight for the coordinated transmission is determined, the channel fluctuates over time, and orthogonality with the transmission weight deviates. As a result, inter-stream interference occurs during the coordinated transmission.

In particular, in the coordinated transmission, since the correlation is small in the channel fluctuation of each link, deviation in orthogonality is likely to occur earlier than in normal transmission. In order to prevent an increase in inter-stream interference and maintain a transmission rate at the time of the coordinated transmission, it is conceivable to frequently perform the Sounding processing, but a system throughput deteriorates due to an influence of overhead due to a time of the Sounding processing.

From the above, it is desirable that the AP can quickly collect the presence or absence of the inter-stream interference at the time of the coordinated transmission by a method other than the Sounding processing, optimize the coordination scheme, and determine possibility of the coordinated transmission for each STA.

Patent Document 1 discloses a method of calculating a channel quality indication (CQI)/signal to interference plus noise ratio (SINR) value of a transmission signal at the time of the coordinated transmission by a combination of a transmission signal from each transmit point (TP) and a TP, and feeding back the calculated value to the TP.

### CITATION LIST

### PATENT DOCUMENT

Patent Document 1: WO 2013/114460 A1

### SUMMARY OF THE INVENTION

### PROBLEMS TO BE SOLVED BY THE INVENTION

However, at the time of the coordinated transmission, a weight to be applied also varies depending on a combination of destinations, and thus it is necessary to optimally select availability of the coordinated transmission and a modulation and coding scheme (MCS) for each combination of STAs.

The present technology has been made in view of such a situation, and aims to improve a system throughput at a time of coordinated transmission.

### SOLUTIONS TO PROBLEMS

A communication control device according to an aspect of the present technology includes a communication control unit that controls processing of receiving signals to be subjected to coordinated transmission by a plurality of communication devices, and processing related to communication on the basis of a training signal prepared for each piece of coordinated transmission information that is information regarding the coordinated transmission.

A communication control device according to another aspect of the present technology includes a communication control unit that controls processing of performing coordinated transmission with another communication device, and processing of transmitting a training signal prepared for each piece of coordinated transmission information that is information regarding the coordinated transmission to a terminal.

In an aspect of the present technology, processing of receiving signals to be subjected to coordinated transmission by a plurality of communication devices and processing related to communication are controlled on the basis of a training signal prepared for each piece of coordinated transmission information that is information regarding the coordinated transmission.

In another aspect of the present technology, processing of performing coordinated transmission with another communication device, and processing of transmitting a training signal prepared for each piece of coordinated transmission information that is information regarding the coordinated transmission to a terminal are controlled.

### BRIEF DESCRIPTION OF DRAWINGS

Fig. 1 is a diagram illustrating a configuration example of a wireless communication system according to an embodiment of the present technology.
Fig. 2 is a block diagram illustrating a configuration example of a communication device operating as an AP.
Fig. 3 is a block diagram illustrating a configuration example of the communication device operating as an STA.
Fig. 4 is a diagram illustrating a first overall sequence according to a first embodiment of the present technology.
Fig. 5 is a diagram illustrating a second overall sequence according to the first embodiment of the present technology.
Fig. 6 is a diagram illustrating a configuration example of a Coordination Request frame.
Fig. 7 is a diagram illustrating a configuration example of a Coordination Response frame.
Fig. 8 is a diagram illustrating a configuration example of a Coordination Trigger frame.
Fig. 9 is a diagram illustrating a configuration example of a data signal (Joint Tx PPDU format) for performing coordinated transmission.
Fig. 10 is a diagram illustrating a configuration example of a Coordination SINR Feedback element.
Fig. 11 is a diagram illustrating a configuration example of a Coordination Enable element.
Fig. 12 is a flowchart illustrating processing of an STA according to the first embodiment.
Fig. 13 is a flowchart illustrating processing of the AP when the Coordination SINR Feedback element is received.
Fig. 14 is a flowchart illustrating processing of the AP at a time of acquiring a transmission right.
Fig. 15 is a flowchart illustrating processing of the AP when the Coordination Request frame is received.
Fig. 16 is a diagram illustrating a first overall sequence according to a second embodiment of the present technology.
Fig. 17 is a diagram illustrating a second overall sequence according to the second embodiment of the present technology.
Fig. 18 is a diagram illustrating a first configuration example of a Coordination TRN Request frame.
Fig. 19 is a diagram illustrating a second configuration example of the Coordination TRN Request frame.
Fig. 20 is a diagram illustrating a configuration example of a Coordination TRN Announcement frame.
Fig. 21 is a diagram illustrating a configuration example of a Coordination TRN frame.
Fig. 22 is a flowchart illustrating processing of an STA according to the second embodiment.
Fig. 23 is a block diagram illustrating a configuration example of a computer.
Fig. 24 is a block diagram illustrating a schematic configuration example of a smartphone to which the present technology is applied.
Fig. 25 is a block diagram illustrating a schematic configuration example of an in-vehicle device to which the present technology is applied.
Fig. 26 is a block diagram illustrating a schematic configuration example of a wireless AP to which the present technology is applied.

### MODE FOR CARRYING OUT THE INVENTION

Hereinafter, modes for carrying out the present technology will be described. The description will be given in the following order.
1. First Embodiment
2. Second Embodiment
3. Others

### <1. First Embodiment>

### <System Configuration>

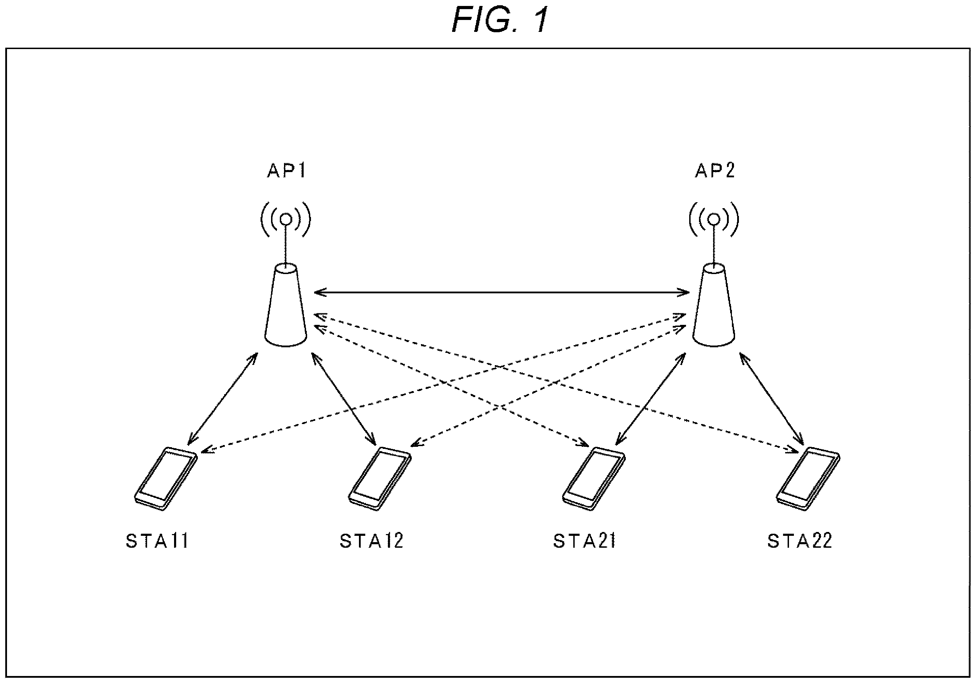

Fig. 1 is a diagram illustrating a configuration example of a wireless communication system according to an embodiment of the present technology.

The wireless communication system in Fig. 1 includes two APs, namely, AP1 and AP2, and four STAs, namely, STA11, STA12, STA21, and STA22. Note that the AP1 and the AP2 will be referred to as AP in a case where it is not particularly necessary to distinguish them from each other. The STA11 and the STA12 will be referred to as STA1x in a case where it is not particularly necessary to distinguish them. The STA21 and the STA22 will be referred to as STA2x in a case where it is not particularly necessary to distinguish them. The STA1x and STA2x will be referred to as STA in a case where it is not particularly necessary to distinguish between them.

Since the STA11 and STA12 are connected to the AP1 by wireless communication as indicated by solid arrows, the STA11 and STA12 receive transmission signals from the AP1. At the time of coordinated transmission, as indicated by dashed arrows, the STA11 and the STA12 receive not only a transmission signal from the AP1 but also a transmission signal from the AP2.

Since the STA21 and STA22 are connected to the AP2 by wireless communication as indicated by solid arrows, the STA21 and STA22 receive transmission signals from the AP2. At the time of coordinated transmission, as indicated by dashed arrows, the STA21 and the STA22 receive not only a transmission signal from the AP2 but also a transmission signal from the AP1.

In Fig. 1, the AP1 has a role of a Master AP. The Master AP mainly determines a coordination scheme and generates a transmission weight when performing the coordinated transmission. Note that, in the following, a case where Joint Tx and C-BF, which are coordination schemes using MIMO (in other words, Sounding processing is required) among the coordination schemes, are performed will be described.

The AP1 and the AP2 normally hold only data packets addressed to subordinate STAs. The AP1 and the AP2 share the data packet addressed to the reception STA only when the AP1 and the AP2 perform the coordinated transmission. In the present technology, it is assumed that the data packet is already shared, and the method and timing will not be described.

Furthermore, in Fig. 1, the link between the AP1 and the AP2 is referred to as a backhaul link. A link between the AP1 and each STA and a link between the AP2 and each STA will be referred to as a fronthaul link. The communication form of the backhaul link is not particularly limited, but a wired LAN cable is used for the backhaul link below unless otherwise specified.

Note that Fig. 1 illustrates an example in which the AP1 is a Master AP, but the Master AP is not limited to the AP1, and for example, the AP2 may operate as the Master AP.

Furthermore, the target system configuration is not limited thereto. That is, in the target system configuration, it is sufficient if a plurality of communication devices to which connection is established exists, and other communication devices exist around each communication device. Furthermore, as long as the conditions described above with reference to Fig. 1 are satisfied, the positional relationship among the communication devices is not limited.

### <Configuration of Communication Device>

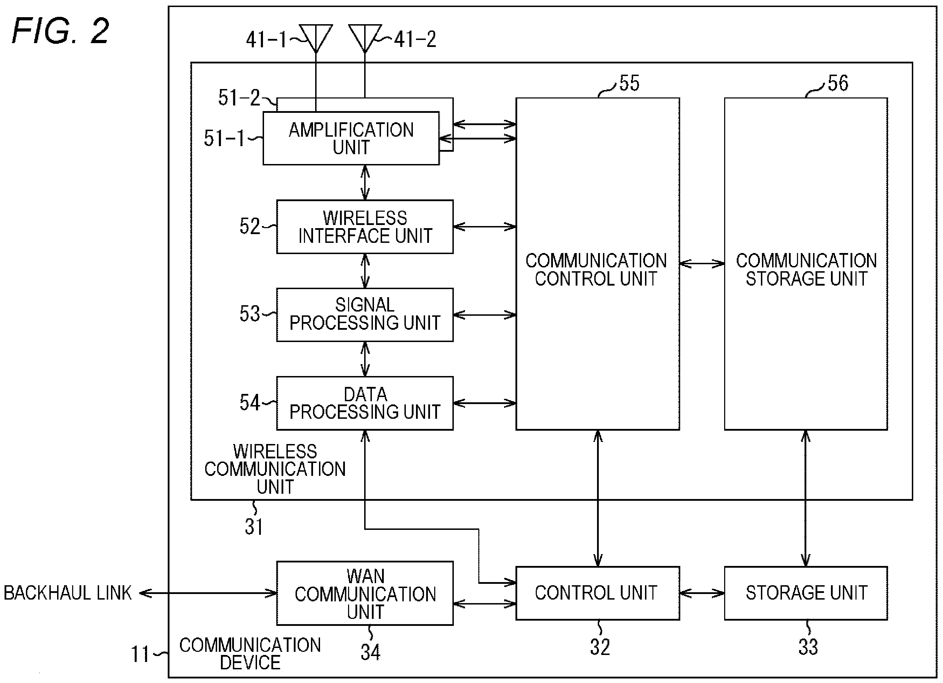

Fig. 2 is a block diagram illustrating a configuration example of a communication device operating as an AP.

A communication device 11 includes a wireless communication unit 31, a control unit 32, a storage unit 33, a wide area network (WAN) communication unit 34, and antennas 41-1 and 41-2. Note that, in a case where it is not necessary to distinguish the antennas 41-1 and 41-2, the antennas 41-1 and 41-2 will be referred to as antennas 41.

The wireless communication unit 31 transmits and receives data. The wireless communication unit 31 includes amplification units 51-1 and 51-2, a wireless interface unit 52, a signal processing unit 53, a data processing unit 54, a communication control unit 55, and a communication storage unit 56. Note that, in a case where it is not necessary to distinguish the amplification units 51-1 and 51-2, the amplification units 51-1 and 51-2 will be referred to as amplification units 51.

The wireless communication unit 31 has two amplification units 51 and one set of the wireless interface unit 52, the signal processing unit 53, and the data processing unit 54 as a 2 × 2 MIMO configuration, but may have a configuration in which an amplification unit 51 corresponding to more antennas 41 is provided to enable high-dimensional MIMO transmission/reception processing. In addition, the wireless communication unit 31 may have a configuration in which, for example, a plurality of wireless interface units 52, a plurality of signal processing units 53, and a plurality of data processing units 54 are provided so that a plurality of links or a plurality of frequency channels can be operated in parallel.

At the time of transmission, the amplification unit 51 amplifies power of an analog signal supplied from the wireless interface unit 52 to a predetermined power, and outputs the analog signal with the amplified power to the antenna 41. At the time of reception, the amplification unit 51 amplifies power of an analog signal supplied from the antenna 41 to a predetermined power, and outputs the analog signal with the amplified power to the wireless interface unit 52.

A part of a function of the amplification unit 51 may be included in the wireless interface unit 52. In addition, a part of the function of the amplification unit 51 may be a component outside the wireless communication unit 31.

At the time of transmission, the wireless interface unit 52 converts a transmission symbol stream from the signal processing unit 53 into an analog signal, and performs filtering, up-conversion to a carrier frequency, and phase control. The wireless interface unit 52 outputs the analog signal after the phase control to the amplification unit 51.

At the time of reception, the wireless interface unit 52 performs phase control, down-conversion, and reverse filtering on an analog signal supplied from the amplification unit 51, and outputs a reception symbol stream obtained as a result of conversion into a digital signal to the signal processing unit 53.

At the time of transmission, the signal processing unit 53 performs encoding, interleaving, modulation, and the like on a data unit supplied from the data processing unit 54, adds a physical header, and generates a transmission symbol stream. The signal processing unit 53 outputs the generated transmission symbol stream to each wireless interface unit 52.

At the time of reception, the signal processing unit 53 analyzes the physical header of a reception symbol stream supplied from each wireless interface unit 52, performs demodulation, deinterleaving, decoding, and the like on the reception symbol stream, and generates a data unit. The signal processing unit 53 outputs the generated data unit to the data processing unit 54.

Note that the signal processing unit 53 performs complex channel characteristic estimation processing and spatial separation processing as necessary.

At the time of transmission, the data processing unit 54 performs sequence management and encryption processing of data held in the communication storage unit 56 and a control signal and management information received from the communication control unit 55. After the encryption process, the data processing unit 54 adds a media access control (MAC) header and an error detection code to generate a packet. The data processing unit 54 performs a plurality of concatenation processing of the generated packets.

At the time of reception, the data processing unit 54 performs decoupling processing of the received packet, analysis of the MAC header, error detection, retransmission request operation, and reorder processing.

The communication control unit 55 controls operation of each component of the wireless communication unit 31 and information transmission between the components. Furthermore, the communication control unit 55 performs control to transfer a control signal and management information to be notified to another communication device to the data processing unit 54.

The communication storage unit 56 holds information to be used by the communication control unit 55. Furthermore, the communication storage unit 56 holds packets to be transmitted and received packets. A transmission buffer that holds packets to be transmitted is included in the communication storage unit 56.

There may be a plurality of the wireless communication units 31. For example, communication between APs and communication between APs and STAs may be performed using different wireless communication units 31.

The control unit 32 is constituted by a central processing unit (CPU), a read only memory (ROM), a random access memory (RAM), and the like. The control unit 32 executes a program stored in the ROM or the like, and controls the wireless communication unit 31 and the communication control unit 55. In addition, the control unit 32 may also perform part of the operation of the communication control unit 55 instead. Furthermore, the communication control unit 55 and the control unit 32 may be configured as one block.

The storage unit 33 holds information used by the wireless communication unit 31 and the control unit 32. In addition, the storage unit 33 may also perform part of the operation of the communication storage unit 56 instead. The storage unit 33 and the communication storage unit 56 may be configured as one block.

The WAN communication unit 34 analyzes the packet acquired from the backhaul link, and transfers the analyzed packet to the wireless communication unit 31 via the control unit 32. The format of the transferred packet may be a state in which the IP Header is left as it is (access point mode) or a state in which the IP Header is removed by the WAN communication unit 34 (router mode).

Note that Fig. 2 illustrates an example in which the wireless communication unit 31 is configured as one IC, but the IC configuration of the present technology is not limited thereto. For example, the wireless interface unit 52 may be mounted as an IC different from the IC of the wireless communication unit 31.

### <Configuration of Communication Device>

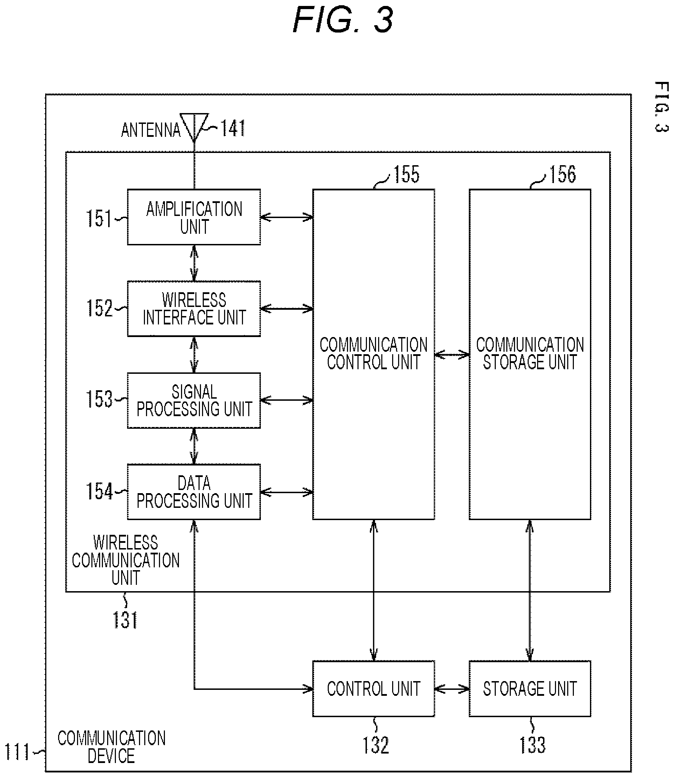

Fig. 3 is a block diagram illustrating a configuration example of the communication device operating as an STA.

A communication device 111 includes a wireless communication unit 131, a control unit 132, a storage unit 133, and an antenna 141.

The control unit 132, the storage unit 133, and the antenna 141 in Fig. 3 have configurations similar to the configurations of the control unit 32, the storage unit 33, and the antenna 41 in Fig. 2.

The wireless communication unit 131 includes an amplification unit 151, a wireless interface unit 152, a signal processing unit 153, a data processing unit 154, a communication control unit 155, and a communication storage unit 156.

The amplification unit 151, the wireless interface unit 152, the signal processing unit 153, the data processing unit 154, the communication control unit 155, and the communication storage unit 156 in Fig. 3 have configurations similar to the configurations of the amplification unit 51, the wireless interface unit 52, the signal processing unit 53, the data processing unit 54, the communication control unit 55, and the communication storage unit 56 in Fig. 2.

Note that the wireless communication unit 131 includes only one set of the amplification unit 151, the wireless interface unit 152, the signal processing unit 153, and the data processing unit 154 as a minimum configuration, but may include a plurality of the antennas 141 and the amplification unit 151 to enable MIMO transmission/reception processing. In addition, the wireless communication unit 131 may have a configuration capable of operating a plurality of links or a plurality of frequency channels in parallel.

### <First Overall Sequence According to First Embodiment>

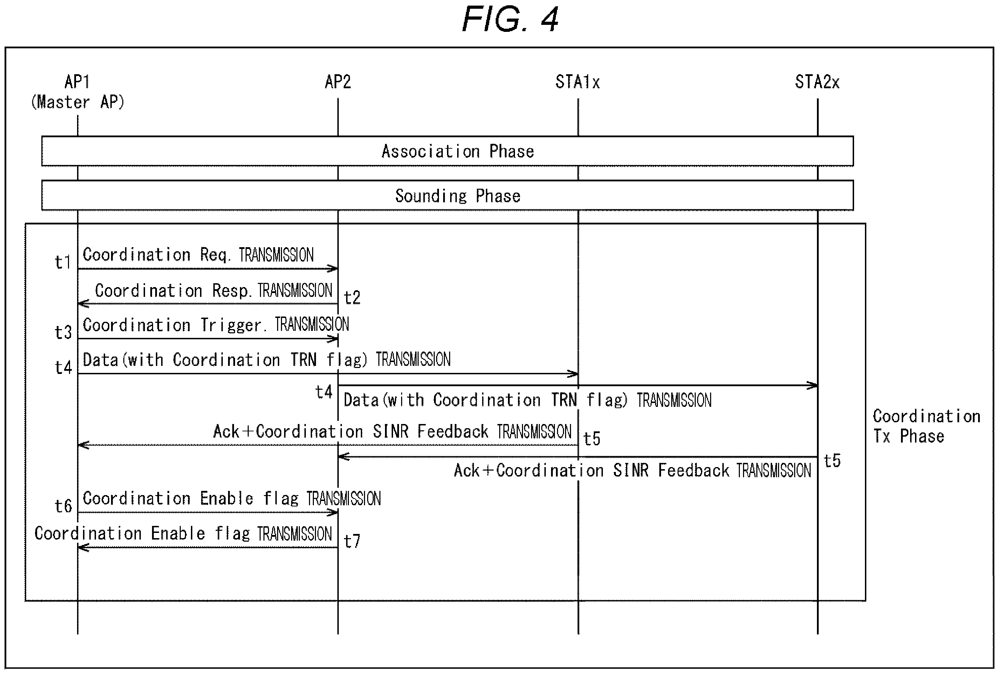

Fig. 4 is a diagram illustrating a first overall sequence according to the first embodiment of the present technology.

In Fig. 4, the overall sequence includes an Association Phase, a Sounding Phase, and a Coordination Tx Phase.

In the Association Phase, the AP1 and the AP2 perform connection processing and authentication processing between the AP and the STA, and setup for the coordinated transmission between the AP1 and the AP2. Specifically, the AP1 and the AP2 exchange capability information with each other, and establish a link and a group for the coordinated transmission.

In the Sounding Phase, the AP1 and the AP2 collect information necessary for determining a transmission weight to be used at the time of the coordinated transmission.

Specifically, the AP transmits a null data packet (NDP), which is a known signal for training, to the STA, causes the STA to perform channel measurement, and then causes the STA to feed back information regarding a channel estimation result. The information to be fed back may be information representing a channel, or may be information compressed only into information necessary for the AP to generate a transmission weight.

Note that, in IEEE 802.11-2016 and IEEE 802.11ax, Sounding processing between an AP and a subordinate STA is standardized. An example of Sounding processing necessary for generating transmission weights for the C-BF and the Joint Tx is described in WO 2021/010133 A. Note that, in the present technology, it is not necessary to limit the method of executing the Sounding processing, and thus details thereof will be omitted.

In the Coordination Tx Phase, the AP1 and the AP2 perform the coordinated transmission (C-BF or Joint Tx). The Coordination Tx Phase includes processing at timings t1 to t10.

Note that, in Fig. 4, the description will be given using the AP2 as an AP that receives a Request frame from the AP1, which is the Master AP, but in a case where another AP capable of performing the coordinated transmission with the AP1 exists, the another AP also performs processing similar to that of the AP2. Furthermore, Fig. 4 illustrates a case where the AP1 acquires a transmission right and transmits a Request frame.

At timing t1 in Fig. 4, the AP1 transmits a Coordination Request frame to the AP2. The AP2 receives the Coordination Request frame. Note that, hereinafter, in the frame name to be transmitted, characters of frame are omitted for convenience of description.

The Coordination Request frame is a request signal for the coordinated transmission. The Coordination Request frame is used to determine whether or not the AP1 performs the coordinated transmission, or to determine the AP and the coordination scheme of a coordination partner when the AP1 performs the coordinated transmission.

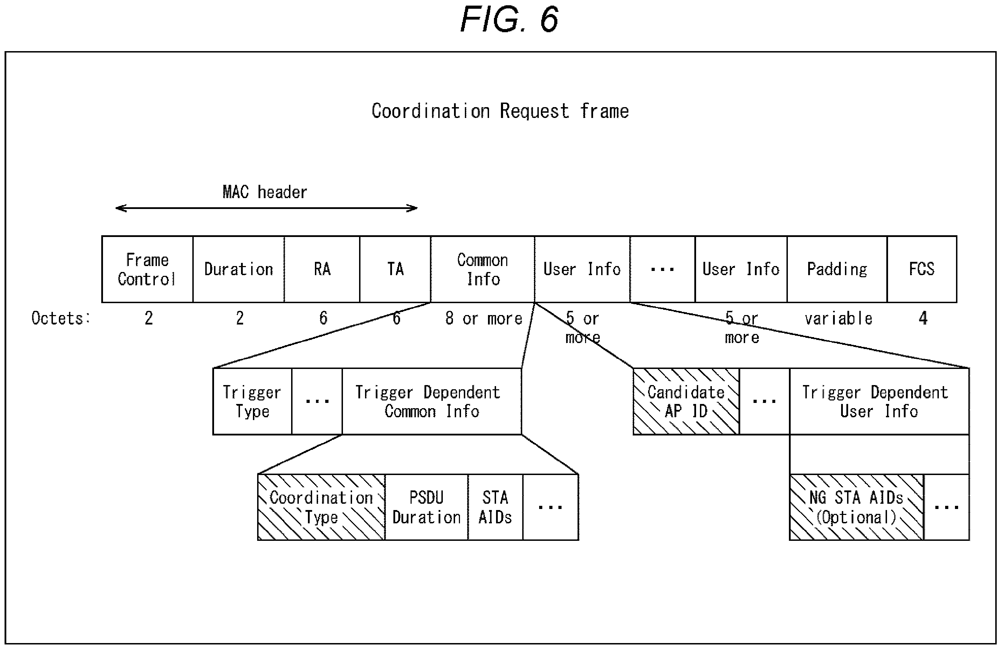

The Coordination Request frame includes information (coordination scheme, destination address, transmission time, and the like) when the AP1 performs data transmission to the STA, an identifier of a candidate AP of a coordination partner, and resource information when the AP that has received the Coordination Request frame transmits a Coordination Response frame. Details of the Coordination Request frame will be described later with reference to Fig. 6.

The Coordination Request frame is broadcast. Note that the Coordination Request frame may be transmitted by multicast or unicast other than broadcast. An identifier (for example, address information) of the candidate AP of the coordination partner indicated in the Coordination Request frame specifies an AP that can respond.

At timing t2, the AP2 that has received the Coordination Request frame including its own identifier transmits a Coordination Response frame that is a response signal to the AP1 after a lapse of a certain period of time. The AP1 receives the Coordination Response frame.

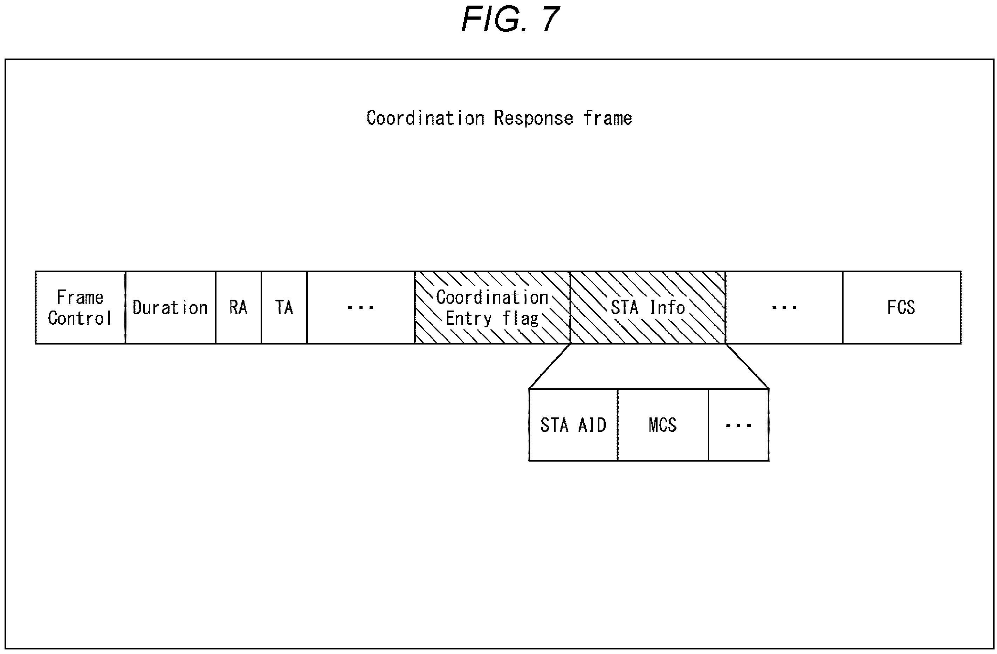

The Coordination Response frame includes information indicating whether or not the coordinated transmission is possible, information regarding transmission (destination address, MCS) and the like of a data signal desired to be transmitted by itself. Details of the Coordination Response frame will be described later with reference to Fig. 7.

The AP1 that has acquired the Coordination Response frame transmitted from the AP2 determines the coordination scheme and the candidate AP of the coordination partner.

In Fig. 4, a case where the data signal is transmitted with the candidate AP of the coordination partner as the AP2 will be described, but the data signal may be transmitted only with the AP1 without performing the coordinated transmission. In addition, other APs than the AP2 may be included in candidates of the coordination partner, and three or more APs may perform the coordinated transmission.

Note that, in a case where the AP2 acquires the transmission right, the AP2 first transmits the Coordination Request frame to the AP1. Thereafter, the AP1 may perform frame exchange of the above-described Coordination Request frame and Coordination Response frame with other surrounding APs. In addition, in a case where there is no candidate AP of another coordination partner, this frame exchange may be omitted.

At timing t3, the AP1 transmits a Coordination Trigger frame to the AP2. The AP2 receives the Coordination Trigger frame.

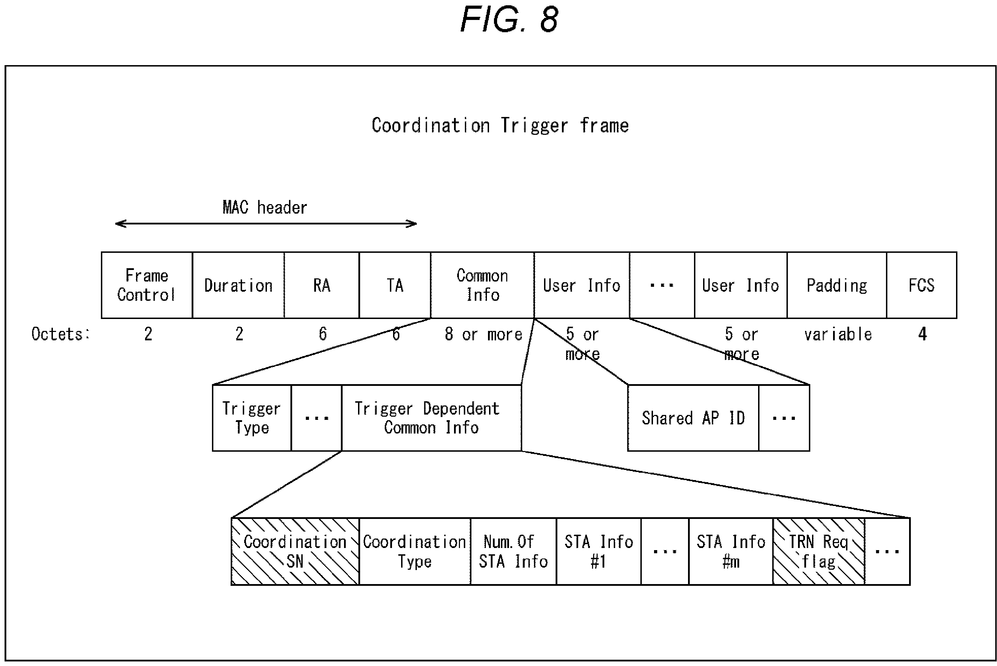

The Coordination Trigger frame includes an identification number for identifying a combination of information regarding the coordinated transmission, and the like. The information regarding the coordinated transmission is, for example, information including one or both of information indicating the coordination scheme and information indicating the destination STA. Hereinafter, the combination represents a combination of the coordination scheme and the destination STA. Details of the Coordination Trigger frame will be described later with reference to Fig. 8.

After a certain period of time has elapsed from the completion of the transmission, the AP1 that has transmitted the Coordination Trigger frame starts the coordinated transmission at timing t4. Furthermore, after a certain period of time has elapsed from the completion of the reception, the AP2 that has received the Coordination Trigger frame starts the coordinated transmission at timing t4.

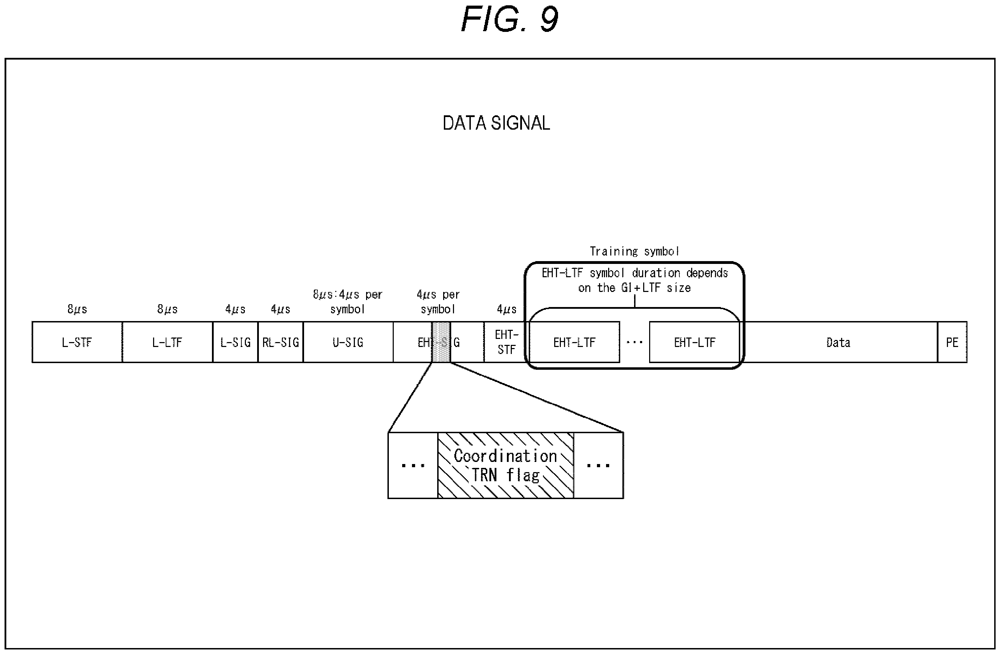

Note that, in the first overall sequence, the data signal to be transmitted includes a training signal of a combination related to the Coordination TRN flag that is a flag indicating whether or not to request the STA to perform the SINR measurement during the coordinated transmission, and the above-described coordinated transmission. Details of the Coordination TRN flag will be described later with reference to Fig. 9.

At timing t5, the STA that has received the coordinately transmitted data signal transmits an Ack Frame, which is a response signal for reception confirmation, to each of the connection destination APs. In a case where the received data signal includes the Coordination TRN flag, the STA measures communication quality on the basis of the training signal.

Note that information regarding the Ack Frame transmission method (transmission timing, resource information, and the like) is included in the coordinately transmitted data signal.

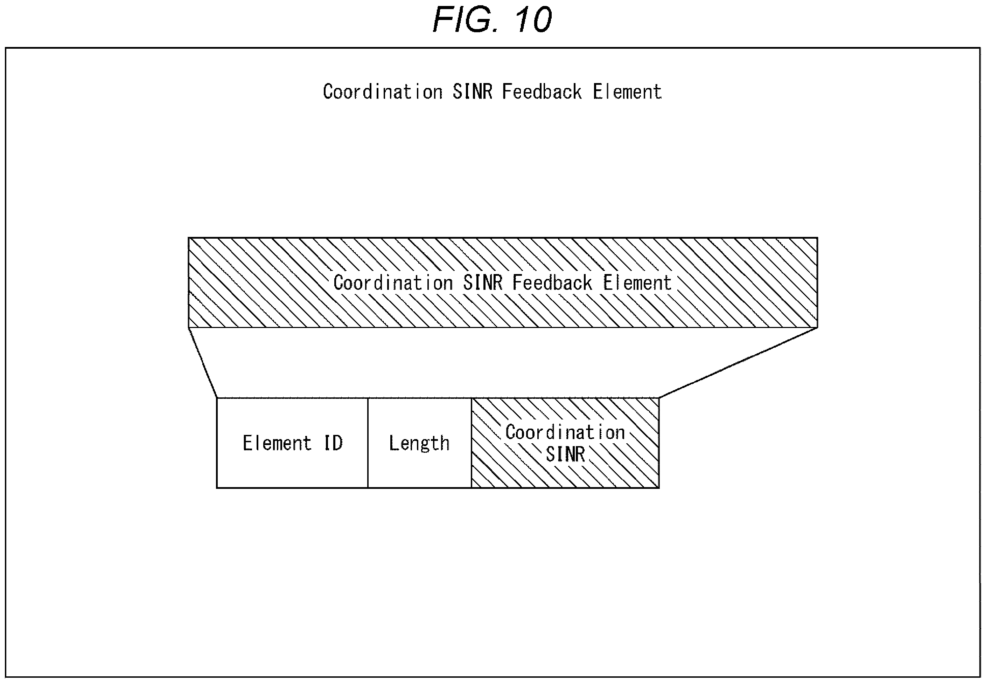

Furthermore, in the first overall sequence, the STA transmits communication quality information measured on the basis of the training signal to the AP1 by including it in the Ack frame, thereby responding with a Coordination SINR Feedback Element for feeding back the communication quality information measured on the basis of the training signal. In addition, the STA may transmit an Ack frame to the AP2, and the communication quality information may be fed back by transmitting information corresponding to the Coordination SINR Feedback Element from the AP2 to the AP1. Details of the Coordination SINR Feedback Element will be described later with reference to Fig. 10.

At timings t6 and t7, the AP1 and the AP2 update a combination capable of the coordinated transmission among the above-described combinations of information regarding the coordinated transmission. In a case where the combination capable of the coordinated transmission is updated, the AP1 transmits a Coordination Enable flag frame, which is a signal including the Coordination Enable flag, to the AP2. Similarly, in a case where the combination capable of the coordinated transmission is updated, the AP2 transmits the Coordination Enable flag frame to the AP1.

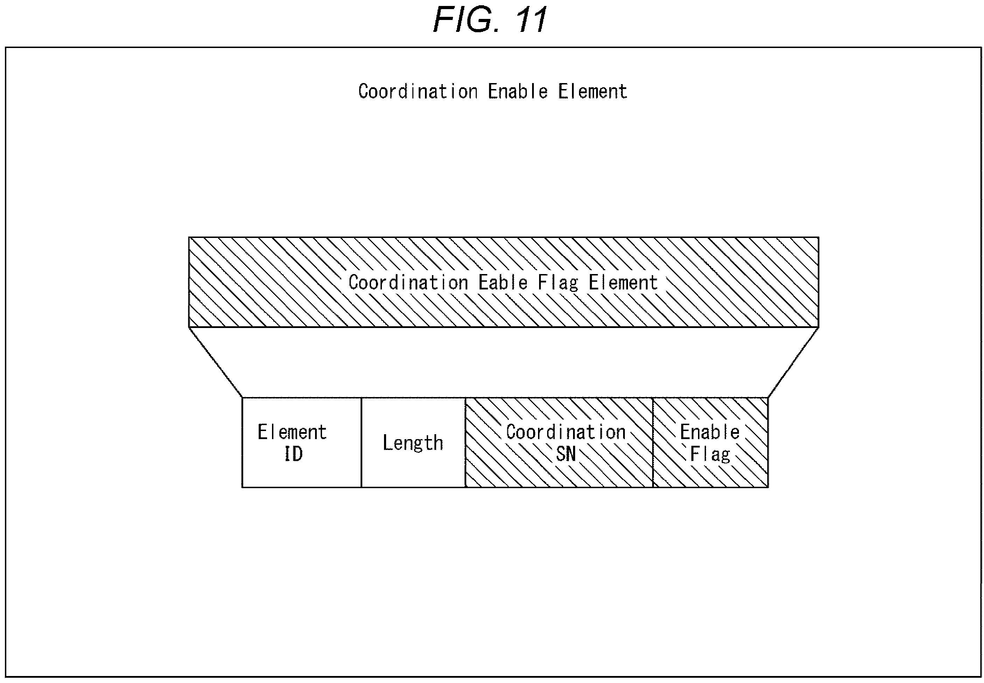

Details of the Coordination Enable flag frame will be described later with reference to Fig. 11.

### <Second Overall Sequence According to First Embodiment>

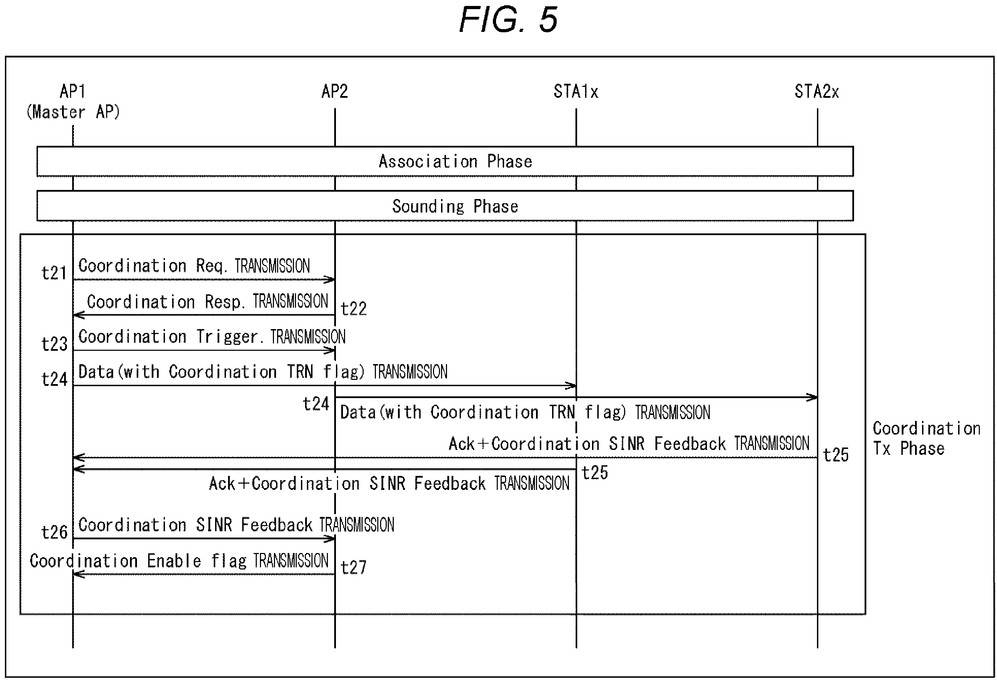

Fig. 5 is a diagram illustrating a second overall sequence according to the first embodiment of the present technology.

The second overall sequence in Fig. 5 includes an Association Phase, a Sounding Phase, and a Coordination Tx Phase, similarly to the first overall sequence in Fig. 4.

In the Coordination Tx Phase of Fig. 5, an example is illustrated in which the AP1, which is the Master AP, collects the Coordination SINR Feedback Elements from all the STAs and shares a part thereof with the AP2.

Timings t21 to t24 of the Coordination Tx Phase in Fig. 5 are similar to timings t1 to t4 of the Coordination Tx Phase in Fig. 4, and thus the description thereof will be omitted.

At timing t25, each STA that has received the coordinately transmitted data signal transmits the Ack Frame to the Master AP (AP1).

The information regarding the Ack transmission method is included in the coordinately transmitted data signal, similarly to the first overall sequence. Also in the second overall sequence, a response with the Coordination SINR Feedback Element is made by a method of being included in the Ack frame.

At timing t26, the AP1 shares the acquired Coordination SINR Feedback Element with the AP2.

At timing t27, as in the case of Fig. 4, the AP1 and the AP2 update the combination capable of the coordinated transmission. In a case where the combination capable of the coordinated transmission is updated, the AP2 transmits a Coordination Enable flag frame, which is a signal including the Coordination Enable flag, to the AP1.

Hereinafter, a new frame configuration and operation used in the Coordination Tx Phase will be described.

### <Configuration of Coordination Request Frame>

Fig. 6 is a diagram illustrating a configuration example of the Coordination Request frame.

The Coordination Request frame in Fig. 6 includes fields of Frame Control, Duration, Receiver Address (RA), Transmitter Address (TA), Common Info, User Info, padding, and Frame Check Sequence (FCS). The Frame Control to TA are MAC Header. Note that only parts related to the present technology will be described below.

The Common Info includes Trigger Type and Trigger Dependent Common Info.

The Trigger Type indicates that Trigger Dependent Common Info is included in Common Info of the Coordination Request frame.

The Trigger Dependent Common Info includes Coordination Type, PHY Service Data Unit (PSDU) Duration, and STA Association ID(AID)s.

The Coordination Type is information indicating a candidate of the coordination scheme. In a case where the Coordination Type includes, for example, a 2-bit field, "1" when the candidate of the coordination scheme is C-BF, "2" when the candidate of the coordination scheme is Joint Tx, "3" when the candidates of the coordination scheme are both, and the like are described in the Coordination Type.

Note that the coordination scheme according to the first embodiment means a coordination scheme that uses MIMO (requires Sounding processing). In addition, in a case where the coordination scheme is C-BF, an AP that performs beam formation may be configured. For example, in a case where the 2-bit field of the Coordination Type is added, as the value of the Coordination Type, "0" is set when it is Sharing AP (AP that has obtained the transmission right) only, "1" is set when it is 1: Shared AP (AP that participates in the coordinated transmission without obtaining the transmission right) only, and "2" is set when it is 2: Both Aps.

The PSDU Duration is information regarding a data transmission time.

The STA AIDs is identification information of the destination STA. A plurality of STAs may be designated as STA AIDs. At this time, "Num. Of STAs" which is a field indicating the number of STAs may be included before the STA AIDs.

The User Info includes Candidate AP ID and Trigger Dependent User Info.

The Candidate AP ID is identification information of a candidate AP of the coordination partner. The identification information of the candidate of the coordination partner may be a MAC address, a BSS Color, or other numbers determined in advance between APs.

The Trigger Dependent User Info includes NG STA AIDs.

The NG STA AIDs is identification information of an STA (for example, STA21) subordinate STAs of the candidate AP (for example, AP2) of the coordination partner, the STA (STA21) being incapable of the coordinated transmission with an STA (for example, STA11) desired by the AP1 that transmits a Request frame as a transmission destination of the coordinated transmission. This information is optionally added information, and may be omitted.

By designating the STA by the NG STA AIDs, the AP1 notifies the candidate AP (AP2) for the coordinated transmission of a coordinated transmission NG STA in advance, and the coordinated transmission NG STA can be excluded from the combination of the coordinated transmission. Note that information of an STA (OK STA) capable of the coordinated transmission may be described as OK STA AIDs instead of NG STA AIDs.

Note that, in Fig. 6, the Coordination Request frame is illustrated on the basis of Trigger Frame of IEEE 802.11ax, but the Coordination Request frame is not limited to the frame configuration of Fig. 6, and is only required to include at least the above-described information. In addition, the Coordination Request frame is illustrated assuming a MAC frame, but may be transmitted as a TCP/IP frame as long as the above-described information is included.

### <Configuration of Coordination Response Frame>

Fig. 7 is a diagram illustrating a configuration example of the Coordination Response frame.

The Coordination Response frame in Fig. 7 includes at least each field of Frame Control, Duration, RA, TA, Coordination Entry flag, STA Info, and FCS. The Frame Control to TA are MAC Header. Note that only parts related to the present technology will be described below.

The Coordination Entry flag is information indicating whether or not the coordinated transmission is possible. Note that a notification of the Coordination Entry flag may be given for each coordination scheme.

The Coordination Entry flag is, for example, a 2-bit field. As a value of the Coordination Entry flag, "1" is set in the case of Coordination BF, "2" is set in the case of Joint Transmission, "3" is set in both cases, and "0" is set in the case where the coordinated transmission is not possible.

The STA Info is information regarding an STA desired as a transmission destination of the coordinated transmission by the AP that transmits the Resonce frame. The information regarding the STA desired as the transmission destination of the coordinated transmission is, for example, identification information (STA AID), a modulation scheme (MCS), or the like. A plurality of pieces of STA Info may be present in the Coordination Response frame. In this case, "Num. Of STA Info" that is a field indicating the number of STAs may be included before STA Info.

Note that, in Fig. 7, the Coordination Response frame is illustrated on the basis of an action frame of IEEE 802.11ax, but the Coordination Response frame is not limited to the frame configuration of Fig. 7, and is only required to include at least the above-described information. In addition, although the Coordination Response frame is illustrated assuming a MAC frame, the Coordination Response frame may be transmitted as a TCP/IP frame as long as the above-described information is included.

### <Configuration of Coordination Trigger Frame>

Fig. 8 is a diagram illustrating a configuration example of the Coordination Trigger frame.

The Coordination Trigger frame in Fig. 8 includes fields of Frame Control, Duration, RA, TA, Common Info, User Info, Padding, and the FCS. The Frame Control to TA are MAC Header. Note that only parts related to the present technology will be described below.

The Common Info includes Trigger Type and Trigger Dependent Common Info.

The Trigger Type indicates that Trigger Dependent Common Info is included in Common Info of the Coordination Trigger frame.

The Trigger Dependent Common Info includes Coordination SN, Coordination Type, Num Of STA Info, and TRN Req flag.

The Coordination SN is an identification number of the coordinated transmission uniquely determined by a combination of the coordination scheme and the destination STA. The Coordination SN is set by the Master AP. Note that the Coordination SN is a number uniquely determined by the destination STA in a case where the coordination scheme is defined, and is a number uniquely determined by the coordination scheme in a case where the destination STA is defined.

As in the case of Fig. 7, the Coordination Type is information indicating a candidate of the coordination scheme.

Note that the coordination scheme according to the first embodiment means a coordination scheme that uses MIMO (requires Sounding processing). In addition, in a case where the coordination scheme is C-BF, an AP that performs beam formation may be configured. For example, in a case where the 2-bit field of the Coordination Type is added, as the value of the Coordination Type, "0" is set when it is Sharing AP (AP that has obtained the transmission right) only, "1" is set when it is 1: Shared AP (AP that participates in the coordinated transmission without obtaining the transmission right) only, and "2" is set when it is 2: Both Aps.

Num Of STA Info is information indicating the number of destination STAs.

The STA Info is information regarding a destination STA to be actually transmitted in the coordinated transmission. The information regarding the destination STA is, for example, identification information (STA AID), a modulation scheme (MCS), or the like.

The TRN Req flag is flag information indicating whether or not to request an STA to perform signal-to-interference-and-noise-ratio (SINR) measurement at the time of the coordinated transmission. For example, in a case where the TRN Req flag is "1", the Shared AP sets the "Coordination TRN flag" in the coordinated transmission data frame described later to "1".

The User Info includes a Shared AP ID. The Shared AP ID is identification information of the AP of the coordination partner, and may be a MAC address, a BSS Color, or a number determined in advance between other APs.

Note that, in Fig. 8, the Coordination Trigger frame is illustrated on the basis of the trigger frame of IEEE 802.11ax, but the Coordination Trigger frame is not limited to the frame configuration of Fig. 8, and is only required to include at least the above-described information. In addition, although the Coordination Trigger frame is illustrated assuming a MAC frame, the Coordination Trigger frame may be transmitted as a TCP/IP frame as long as the above-described information is included.

### <Configuration of Data Signal>

Fig. 9 is a diagram illustrating a configuration example of a data signal (Joint Tx PPDU format) transmitted by the coordinated transmission.

The data signal in Fig. 9 includes an L-STF, an L-LTF, an L-SIG, an RL-SIG, a U-SIG, an EHT-SIG, an EHT-STF, a plurality of EHT-LTFs, Data, and PE. In the data signal, the L-STF to the EHT-LTF are physical (PHY) headers. Note that only parts related to the present technology will be described below.

In Fig. 9, the Coordination TRN flag is included in the EHT-SIG. The Coordination TRN flag is flag information indicating whether or not SINR measurement at the time of the coordinated transmission is requested to the STA.

For example, when the Coordination TRN flag is "1", the STA measures communication quality using the training signal, and transmits an Ack signal including the Coordination SINR Feedback element to be described later.

The plurality of EHT-LTFs is known training signals used for reception channel measurement during MIMO transmission. That is, the plurality of EHT-LTFs is training signals corresponding to the Coordination SN of the Coordination Trigger frame. In the present technology, in order to use the EHT-LTF also for SINR measurement during the coordinated transmission, the same value as the transmission weight applied to the subsequent data portion is applied to the EHT-LTF.

Note that EHT-LTFs using different subcarriers may be generated and transmitted between APs that perform the coordinated transmission. In this way, since the AP is hardly affected by synchronization deviation or frequency deviation between the APs, the factor of the decrease in the SINR can be limited to the deviation in orthogonality between the channel and the transmission weight. In addition, in Fig. 9, an example in which each field (information element) of the EHT-SIG, the EHT-STF, and the plurality of EHT-LTFs is included in the PHY header has been described, but the names of the fields may be different as long as the fields including equivalent information are configured.

In Fig. 9, the data signal is illustrated based on EHT SU PPDU of IEEE 802.11be, but the data signal is not limited to the frame configuration of Fig. 9, and only needs to include at least the training signal (EHT-LTF) to which the transmission weight is applied and the flag information (Coordination TRN flag) indicating whether or not SINR measurement is requested to the STA. In addition, although the data signal in Fig. 9 is illustrated assuming a PHY frame, the data signal may be transmitted as a MAC frame or a TCP/IP frame as long as the above-described information is included.

### <Configuration of Coordination SINR Feedback Element>

Fig. 10 is a diagram illustrating a configuration example of the Coordination SINR Feedback Element.

The Coordination SINR Feedback Element in Fig. 10 is an Element included in the Ack frame, and includes Element ID, Length, and Coordination SINR. Note that only parts related to the present technology will be described below.

The Coordination SINR is a received SINR value of the coordinately transmitted data signal. The received SINR value is communication quality information obtained by measuring the communication quality using the training signal included in the data signal. Note that the received SINR value may be indicated by a real number or by index information of a table defined in standards or the like.

In Fig. 10, the Coordination SINR Feedback Element is described on the basis of the Element of IEEE 802.11, but is not limited to the configuration of Fig. 10, and it is sufficient that at least the above-described information is included. In addition, although the frame of the Coordination SINR Feedback Element in Fig. 10 is assumed to be a MAC frame, the frame may be transmitted as a TCP/IP frame as long as the above-described information is described.

### <Configuration of Coordination Enable Element>

Fig. 11 is a diagram illustrating a configuration example of a Coordination Enable Element.

The Coordination Enable element in Fig. 11 includes Element ID, Length, Coordination SINR, and Enable Flag. Note that only parts related to the present technology will be described below.

As in Fig. 8, the Coordination SN is a number uniquely determined by a combination of the coordination scheme and the destination STA. The Coordination SN is set by the Master AP.

The Enable Flag is a flag indicating whether to enable or disable the combination of the coordination scheme specified by the Coordination SN and the destination STA.

For example, in a case where a notification of "0" is given for the combination of the coordination scheme and the destination STA associated with the Coordination SN, this combination of the coordination scheme and the destination STA is invalidated, and the coordinated transmission is not performed until the transmission weight is updated by the Sounding processing.

Note that, in a case where the AP that receives the frame of the Coordination SINR Feedback element is the Master AP, whether or not to perform the Sounding processing again may be determined as necessary.

### <Processing of STA According to First Embodiment>

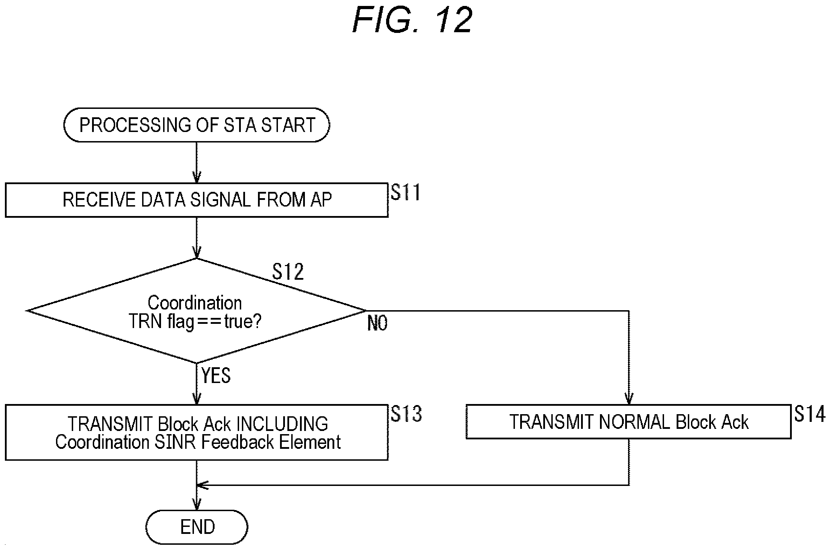

Fig. 12 is a flowchart illustrating processing of the STA according to the first embodiment.

Note that the processing of Fig. 12 is processing performed by the communication control unit 155 of the STA controlling each unit of the wireless communication unit 131.

In step S11, the communication control unit 155 receives a data signal coordinately transmitted from the AP.

In step S12, the communication control unit 155 determines whether or not the received data signal includes the Coordination TRN flag and is True (1). In a case where the received data signal includes the Coordination TRN flag and it is determined in step S12 that the received data signal is True (1), the processing proceeds to step S13.

In step S13, the communication control unit 155 performs SINR measurement using the EHT-LTF, and transmits an Ack Frame (Block Ack) including the Coordination SINR Feedback Element to the AP after a lapse of a certain time from the end of reception. Thereafter, the processing of Fig. 12 ends.

In step S12, in a case where it is determined that the received data signal does not include the Coordination TRN flag, or is False (0) even if the received data signal includes the Coordination TRN flag, the processing proceeds to step S14.

In step S14, the communication control unit 155 transmits a normal Ack Frame (Block Ack) as in the related art. Thereafter, the processing of Fig. 12 ends.

### <Processing of AP in Receiving Coordination SINR Feedback Element>

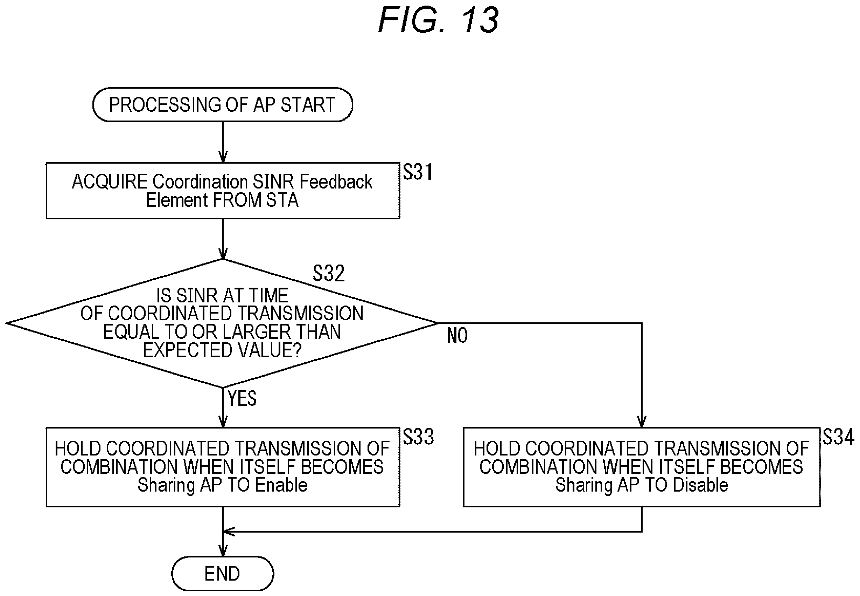

Fig. 13 is a flowchart illustrating processing of the AP when the Coordination SINR Feedback Element is received.

Note that the processing of Fig. 13 is processing performed by the communication control unit 55 of the AP controlling each unit of the wireless communication unit 31.

In step S31, the communication control unit 55 of the AP receives the Ack frame transmitted from the STA, and acquires the Coordination SINR Feedback Element from the Ack frame.

In step S32, the communication control unit 55 determines whether or not the value of the Coordination SINR at the time of the coordinated transmission is a predetermined expected value or more.

The predetermined expected value is a value determined from the lowest MCS that the AP can tolerate for the STA. The predetermined expected value may be determined by the AP using a unique algorithm, defined in standards, or set by the user.

In a case where it is determined in step S32 that the value of the Coordination SINR is equal to or larger than the predetermined expected value, the processing proceeds to step S33.

In step S33, the communication control unit 55 holds the coordinated transmission of the combination of the coordination scheme and the destination STA when itself becomes a Sharing AP in the Enable state.

In a case where it is determined in step S32 that the value of the Coordination SINR is less than the predetermined expected value, the processing proceeds to step S34.

In step S34, the communication control unit 55 changes the coordinated transmission of the combination of the coordination scheme and the destination STA when itself becomes a Sharing AP to the Disable state, and notifies another AP of the Coordination Enable Flag as necessary.

Here, the communication control unit 55 changes the Enable or Disable state only when itself is the Sharing AP on the basis of the following idea.

In a case where itself performs the coordinated transmission as the Sharing AP and the throughput of itself is greatly reduced, it is desirable that the communication control unit 55 select not to perform the coordinated transmission and perform the data transmission only by itself.

In a case where itself is a Shared AP, it is desirable that the communication control unit 55 performs the coordinated transmission even with a low MCS.

### <Processing of AP at Time of Acquisition of Transmission Right>

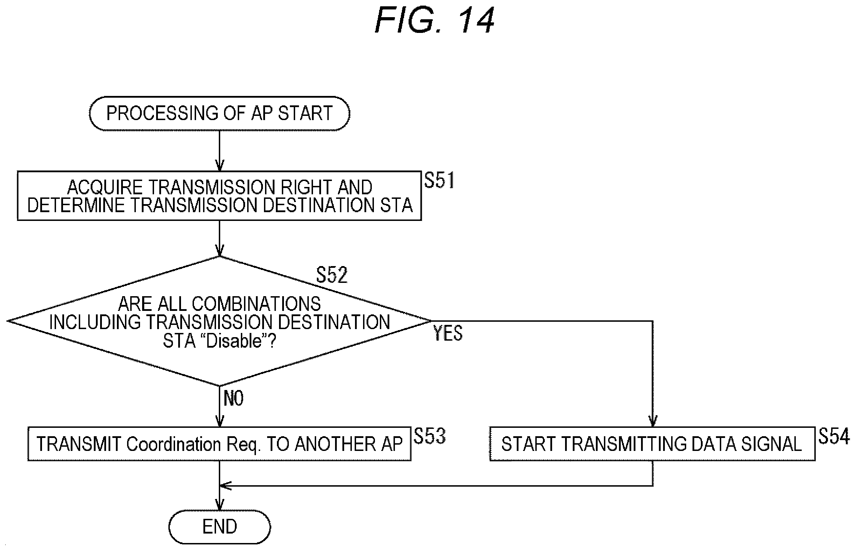

Fig. 14 is a flowchart illustrating processing of the AP at the time of acquiring the transmission right.

Note that the processing of Fig. 14 is processing performed by the communication control unit 55 of the AP controlling each unit of the wireless communication unit 31.

In step S51, the communication control unit 55 of the AP acquires the transmission right, and determines an STA to be a transmission destination from now on.

In step S52, the communication control unit 55 searches for a combination to be in the Enable state among combinations (the coordination scheme and the destination STA) including the transmission destination STA, and determines whether or not all combinations including the transmission destination STA are "Disable".

In a case where at least one combination capable of the coordinated transmission (Enable) exists, it is determined in step S52 that all the combinations including the STA are not "Disable", and the processing proceeds to step S53.

In step S53, the communication control unit 55 transmits the Coordination Request frame to another AP and attempts the coordinated transmission. At this time, information indicating a subordinate STA of another AP that cannot perform the coordinated transmission with the transmission destination STA may be described in NG STAs in the frame to give a notification of the information. Thereafter, the processing of Fig. 14 ends.

On the other hand, in a case where it is determined in step S52 that all the combinations are coordinated transmission impossible (Disable), the processing proceeds to step S54.

In step S54, the AP starts transmitting the data signal without performing the coordinated transmission. Thereafter, the processing of Fig. 14 ends.

As described above, the time for exchanging the candidate request frame and the candidate response frame can be omitted.

### <Processing of AP in Receiving Coordination Request Frame>

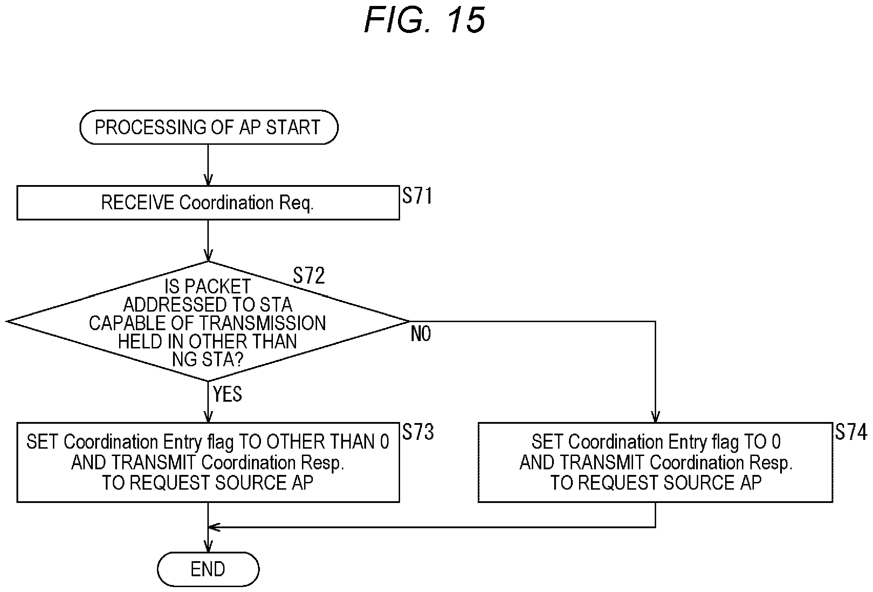

Fig. 15 is a flowchart illustrating processing of the AP when the Coordination Request frame is received.

Note that the processing of Fig. 15 is processing performed by the communication control unit 55 of the AP controlling each unit of the wireless communication unit 31. In step S71, the communication control unit 55 receives the Coordination Request frame.

In step S72, the communication control unit 55 checks whether or not a packet addressed to an STA capable of the coordinated transmission is held on the basis of information of an NG STA (STA incapable of the coordinated transmission) included in the Coordination Request frame.

In a case where it is determined in step S72 that the packet addressed to the STA capable of the coordinated transmission is held, the processing proceeds to step S73.

In step S73, the communication control unit 55 sets the value of the Coordination Entry flag to a value other than 0 (information indicating a possible coordination scheme) and transmits the Coordination Response frame. Thereafter, the processing of Fig. 15 ends.

In a case where it is determined in step S72 that the packet addressed to the STA capable of the coordinated transmission is not held, the processing proceeds to step S74.

In step S74, the communication control unit 55 sets the value of the Coordination Entry flag to 0 (coordinated transmission impossible) and transmits the Coordination Response frame. Thereafter, the processing of Fig. 15 ends.

### <Effects of First Embodiment>

As described above, according to the first embodiment of the present technology, it is possible to optimize the modulation scheme at the time of the coordinated transmission and determine possibility of the coordinated transmission can be performed in a short time, and improvement of the system throughput can be expected.

Furthermore, according to the first embodiment, by including the training signal in the coordinated transmission packet (data signal), the SINR measurement can be performed with low overhead.

However, in a case where the orthogonality of the transmission weight is already lost and the SINR is lowered, a packet loss may occur and the data transmission time may be wasted. Therefore, a technique of the following second embodiment is proposed.

### <2. Second Embodiment>

In the first embodiment, an example in which the training signal is transmitted at the same timing as the timing at which the coordinated transmission of the data signal is performed has been described, but in the second embodiment, an example in which the training signal is transmitted at a timing different from the timing at which the coordinated transmission of the data signal is performed (for example, the timing before the coordinated transmission of the data signal) will be described.

Note that a system configuration and a device configuration of the second embodiment are similar to the system configuration and the device configuration of the first embodiment. Therefore, hereinafter, the system configuration and the device configuration of the first embodiment described above with reference to Figs. 1 to 3 are also used as the system configuration and the device configuration of the second embodiment.

### <First Overall Sequence According to Second Embodiment>

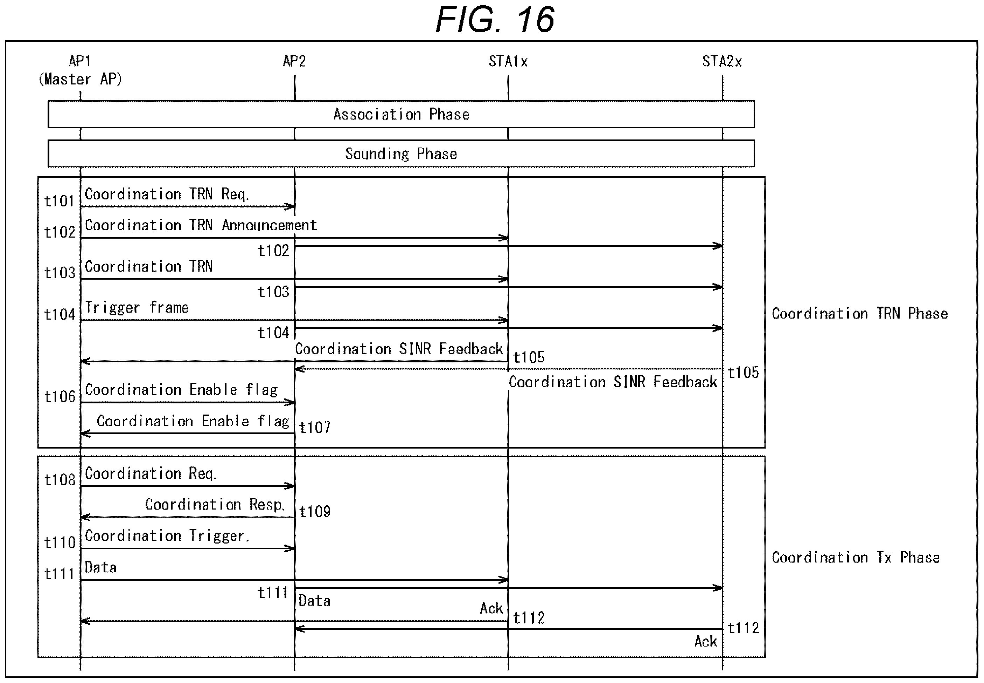

Fig. 16 is a diagram illustrating a first overall sequence according to the second embodiment of the present technology.

The second embodiment is different from the first embodiment in that a Coordination TRN Phase is newly added before the Coordination Tx Phase. In the second embodiment, description of parts common to the first embodiment will be omitted.

In Fig. 16, the overall sequence includes an Association Phase, a Sounding Phase, a Coordination TRN Phase, and a Coordination Tx Phase.

In the Coordination TRN Phase, the AP1 and the AP2 coordinately transmit the training signal for each combination of the coordination scheme and the destination STA, so that the SINR values in a plurality of combinations are collected at once in a short time. Note that, as described above, in a case where the coordination scheme is determined, the training signal for each destination STA is transmitted, and in a case where the destination STA is determined, the training signal for each coordination scheme is transmitted.

The Coordination TRN Phase includes processing at timings t101 to t107. Note that Fig. 16 illustrates an example in which the AP1 has acquired the transmission right.

At timing t101, the AP1 transmits a Coordination TRN Request frame to the AP2.

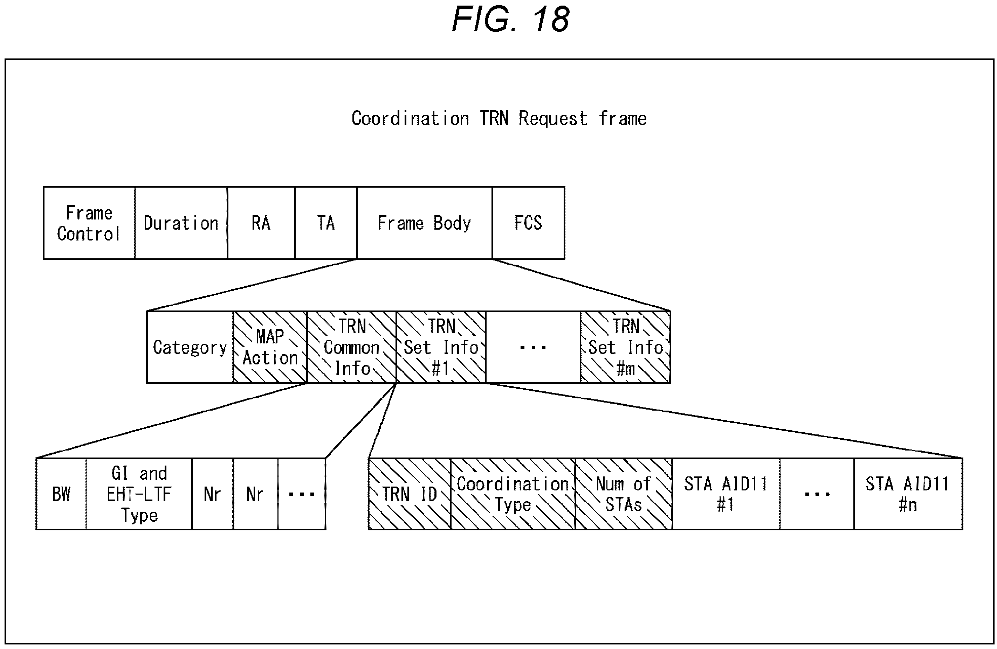

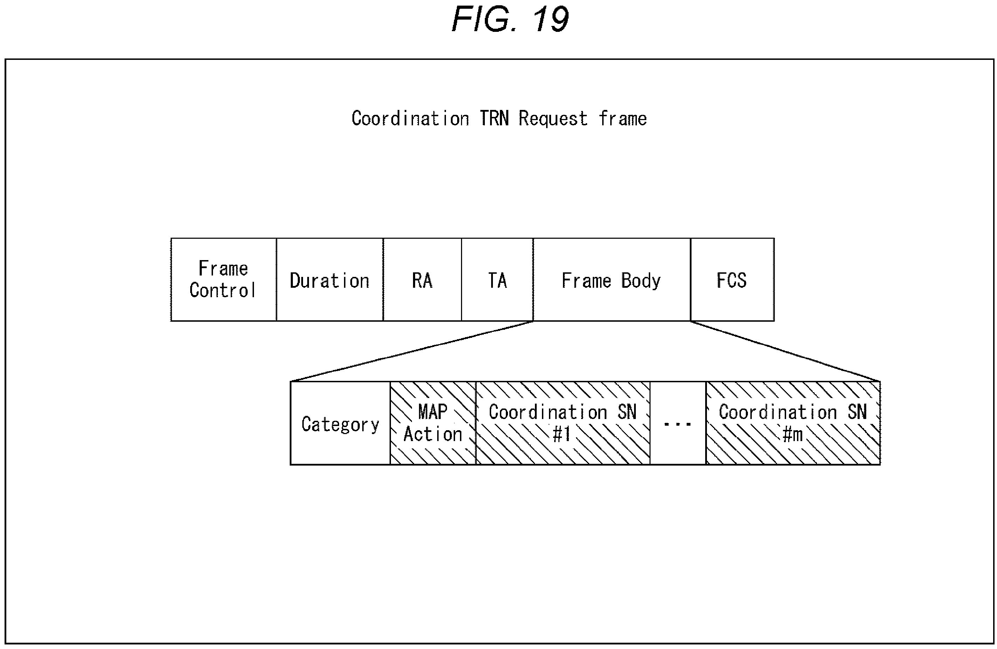

The Coordination TRN Request frame is a signal transmitted by the AP1 to request another AP to transmit a training signal (Coordination TRN frame) to be described later. The Coordination TRN Request frame includes a training signal transmission method and information regarding each coordinated transmission. Details of the Coordination TRN Request frame will be described later with reference to Fig. 18 or Fig. 19.

At timing t102, the AP1 transmits a Coordination TRN Announcement frame, which is an announcement signal notifying in advance that the training signal is to be transmitted, to the subordinate STA1x. The AP2 transmits the Coordination TRN Announcement frame to the STA2x.

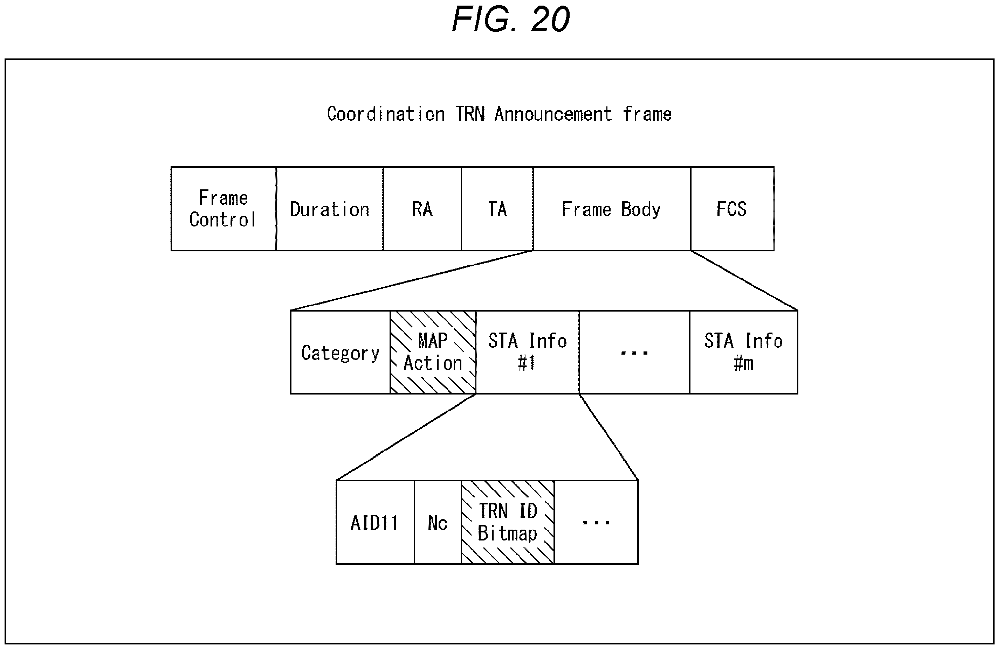

The Coordination TRN Announcement frame includes information regarding the STA requesting the SINR measurement. Details of the Coordination TRN Announcement frame will be described later with reference to Fig. 20.

The Coordination TRN Announcement frame is transmitted in broadcast. Note that the Coordination TRN Announcement frame may be transmitted by multicast or unicast other than broadcast. The STA receives the Coordination TRN Announcement frame, and determines whether or not the signal is addressed to the STA itself by checking whether or not the identifier of the STA itself is included in the frame. Note that at timing t102, the same frame is generated and transmitted by the AP1 and the AP2.

At timing t103, the AP1 and the AP2 coordinately transmit a Coordination TRN frame, which is a training signal. The STA receives the Coordination TRN frame.

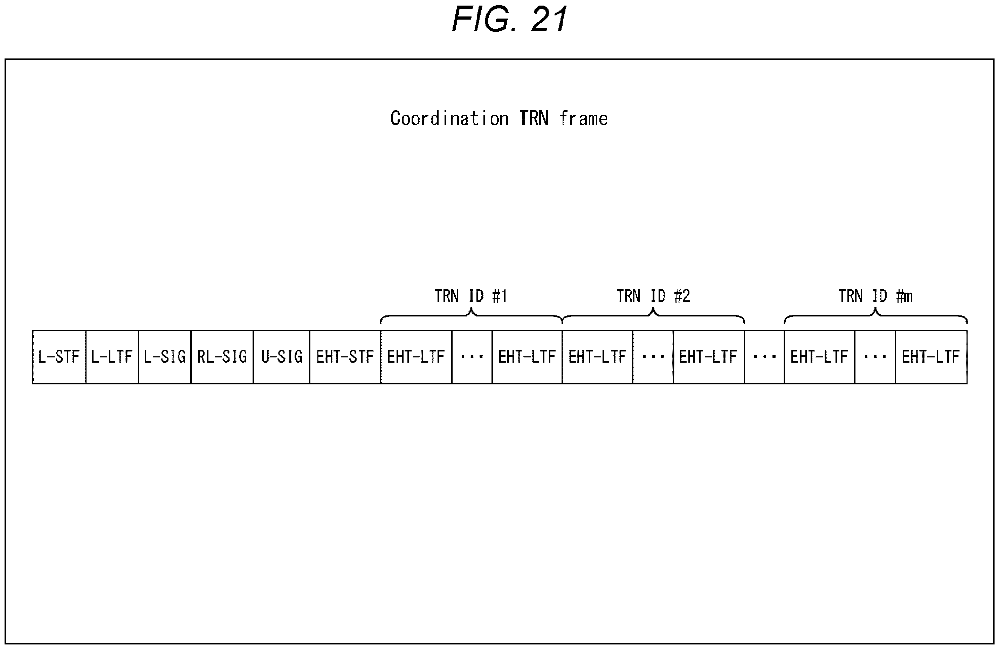

The Coordination TRN frame includes an EHT-LTF for each combination of the coordination scheme and the destination AP. Details are described below with reference to Fig. 21.

At timing t104, the AP1 and the AP2 transmit the Trigger frame to their respective subordinate STAs. The STAs each receive a Trigger frame.

At timing t105, the STA transmits the frame of the Coordination SINR Feedback Element to the corresponding AP. This frame includes the Coordination SINR Feedback Element for each combination of the coordination scheme and the destination AP. The AP1 and the AP2 receive and collect frames of the Coordination SINR Feedback Element transmitted from the STA.

At timings t104 and t105, the same frame is generated and transmitted by the AP1 and the AP2, and the signal from the STA is frequency-divided and transmitted by OFDMA. Note that the transmission method by the STA is not limited to frequency division, and the Coordination SINR Feedback Element may be collected in time division according to the situation.

At timings t106 and t107, the AP1 and the AP2 update the combination capable of the coordinated transmission, as in the first embodiment. In a case where the combination capable of the coordinated transmission is updated, the AP1 transmits a Coordination Enable flag frame, which is a signal including the Coordination Enable flag, to the AP2. Similarly, in a case where the combination capable of the coordinated transmission is updated, the AP2 transmits a Coordination Enable flag frame, which is a signal including the Coordination Enable flag, to the AP1.

In the Coordination Tx Phase of Fig. 16, the AP1 and the AP2 perform the coordinated transmission (C-BF or Joint Tx). The Coordination Tx Phase includes processing at timings t108 to t112.

Note that the processing from timing t108 to timing t112 in Fig. 16 is to perform processing basically similar to the processing from timing t1 to timing t7 in Fig. 4 except that a data signal in which the Coordination TRN flag is set to FALSE (0) is transmitted at timing t104 and a normal Ack not including the Coordination SINR Feedback Element is transmitted at timing t105, and thus the description thereof will be omitted.

### <Second Overall Sequence According to Second Embodiment>

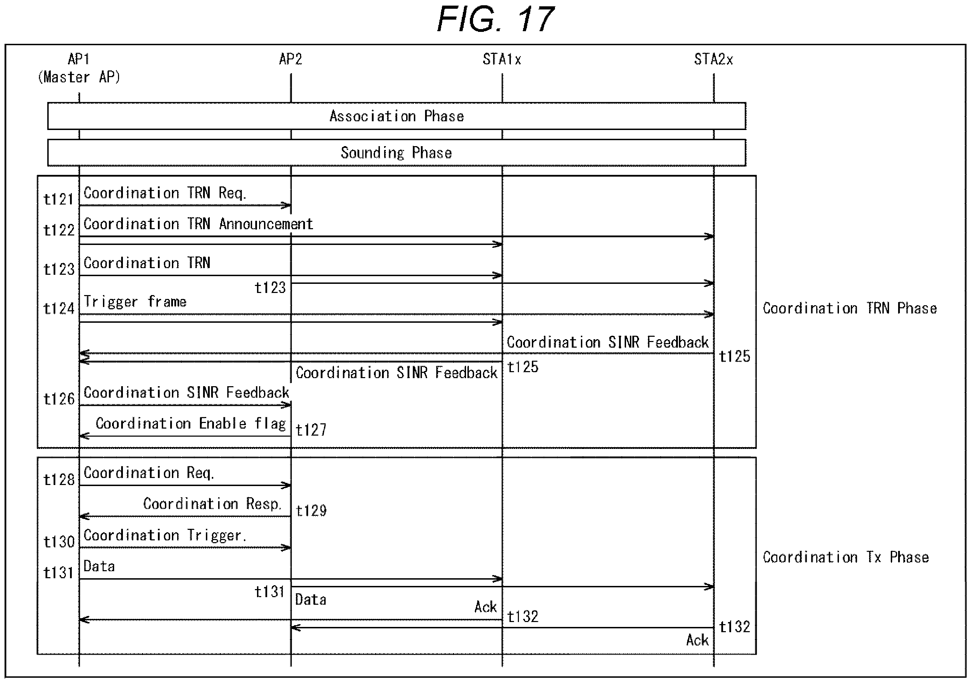

Fig. 17 is a diagram illustrating a second overall sequence according to the second embodiment of the present technology.

The second overall sequence in Fig. 17 includes an Association Phase, a Sounding Phase, a Coordination TRN Phase, and a Coordination Tx Phase, similarly to the first overall sequence in Fig. 16.

Note that, in the Coordination TRN Phase of Fig. 17, similarly to the Coordination Tx Phase of Fig. 5 of the first embodiment, an example is illustrated in which the AP1, which is the Master AP, collects the Coordination SINR Feedback Elements from all the STAs and shares a part thereof with the AP2.

Timing t121 of the Coordination TRN Phase in Fig. 17 is similar to timing t101 of the Coordination Tx Phase in Fig. 16, and thus the description thereof will be omitted.

At timing t122, the AP1 transmits the Coordination TRN Announcement frame to the STA1x and the STA2x. The STA1x and the STA2x receive the Coordination TRN Announcement frame.

At timing t123, the AP1 and the AP2 coordinately transmit the Coordination TRN frame. The STA receives each Coordination TRN frame and measures the communication quality using the training signal.

At timing t124, the AP1 transmits a Trigger frame to the STA1x and the STA2x. The STA1x and the STA2x receive the Trigger frame.

At timing t125, the STA1x and the STA2x transmit a frame of the Coordination SINR Feedback Element including the communication quality information to AP1. The AP1 receives each frame of the Coordination SINR Feedback element transmitted from the STA, and collects the Coordination SINR Feedback Element.

At timing t126, the AP1 shares the collected Coordination SINR Feedback Element with the AP2.

At timing t127, as in the case of Fig. 4, the AP1 and the AP2 update the combination capable of the coordinated transmission. In a case where the combination capable of the coordinated transmission is updated, the AP2 transmits a signal including the Coordination Enable flag to the AP1.

In the Coordination Tx Phase of Fig. 17, the AP1 and the AP2 perform the coordinated transmission (C-BF or Joint Tx). The Coordination Tx Phase includes processing at timings t128 to t132.

Hereinafter, a new frame configuration and operation used in the Coordination TRN Phase will be described.

### <First Configuration of Coordination TRN Request Frame>

Fig. 18 is a diagram illustrating a first configuration example of the Coordination TRN Request frame.

The Coordination TRN Request frame includes fields of Frame Control, Duration, RA, TA, Frame Body, and the FCS. Note that only portions related to the present technology will be described below.

The Frame Body includes Category, MAP Action, TRN Common Info, and a plurality of pieces of TRN Set Info.

Category is information indicating the type of this action frame. In Fig. 18, information indicating that this action frame is a "MAP Action frame" is included.

The MAP Action is information indicating a type of this MAP action frame. In Fig. 18, information indicating that this MAP action frame is the "Coordination TRN Request frame" is included.

The TRN Common Info is a common information group related to the subsequent Coordination TRN frame.

The TRN Common Info includes information such as BW, GI and EHT-LTF Type, Nr, and Nc.

The BW is information indicating a transmission bandwidth.

The GI and EHT-LTF Type is information indicating a guard interval and a configuration of an EHT-LTF signal.

The Nr is information indicating the number of dimensions on the transmission side.

The Nc is information indicating the number of dimensions on the reception side.

The TRN Set Info is an information group indicating a combination of a coordination scheme for measuring the communication quality using the training signal and the destination STA. The TRN Set Info is provided for each combination.

The TRN Set Info includes information such as TRN ID, Coordination Type, Num of STAs, and STA AID.

The TRN ID is identification information of a combination of a coordination scheme and a destination STA.

The Coordination Type is information indicating the coordination scheme.

The Num of STAs is information indicating the number of destination STAs.

The STA AID is identification information (AID) of the STA.

Note that, in Fig. 18, the Coordination TRN Request frame is illustrated on the basis of the Action frame of IEEE 802.11, but the Coordination TRN Request frame is not limited to the frame configuration of Fig. 18, and is only required to include at least the above-described information. In addition, the Coordination TRN Request frame is illustrated assuming a MAC frame, but may be transmitted as a TCP/IP frame as long as the above-described information is included.

### <Second Configuration of Coordination TRN Request Frame>

Fig. 19 is a diagram illustrating a second configuration example of the Coordination TRN Request frame.

The Coordination TRN Request frame in Fig. 19 is different from the Coordination TRN Request frame in Fig. 18 in that the Num of STAs and the STA AID are replaced with the Coordination SN in the Frame Body.

The Coordination SN is an identification number indicating a combination of the coordination scheme and the destination STA. This identification number needs to be already shared between the APs by a method such as being transmitted in advance. Furthermore, a value indicating the order of the Coordination SN is used for the TRN ID in TRN ID bitmap described later.

### <Configuration of Coordination TRN Announcement Frame>

Fig. 20 is a diagram illustrating a configuration example of the Coordination TRN Announcement frame.

The configuration of the Frame Body of the Coordination TRN Announcement frame in Fig. 20 is only different from that of the Coordination TRN Request frame in Fig. 18, and thus only different portions will be described in Fig. 20.

The Frame Body in Fig. 20 includes Category, MAP Action, and STA Info.

The STA Info is an information group related to an STA that requests measurement.

The STA Info includes AID, Nc, TRN ID Bitmap, and the like.

The AID is an identifier (AID) of the STA that requests measurement.

The Nc is information indicating the number of dimensions on the reception side.

The TRN ID bitmap is bitmap information indicating the TRN ID requested to be measured by the STA.

For example, in a case where "1010" is described in the field of the TRN ID Bitmap, the STA selects the EHT-LTF group corresponding to TRN#1 and TRN#3 and measures the SINR. Other EHT-LTF groups may be ignored.

Note that the field of the TRN ID Bitmap is represented in the form of a bitmap. However, in a case where a notification of one or more TRN IDs to be measured by the STA is given, the field of the TRN ID Bitmap may not necessarily be represented in the form of a bitmap.

### <Configuration of Coordination TRN Frame>

Fig. 21 is a diagram illustrating a configuration example of the Coordination TRN frame.

Fig. 21 illustrates an example in which the Coordination TRN frame is configured by extending a PHY frame of IEEE 802.11be.

The Coordination TRN frame includes fields of an L-STF, an L-LTF, an L-SIG, an RL-SIG, a U-SIG, an EHT-STF, and a plurality of EHT-LTFs.

The EHT-LTF is a known training signal used for reception channel measurement during MIMO transmission. In the second embodiment, in order to use the EHT-LTF also for SINR measurement during the coordinated transmission, a transmission weight used during the coordinated transmission is applied to the EHT-LTF for each TRN ID.

The number of EHT-LTFs indicated by one TRN ID is determined by the total value of transmission streams. For example, in a case where the number of transmission streams is two, the number of EHT-LTFs is two, and in a case where the number of transmission streams is three or four, the number of EHT-LTFs is four.

If the dimension of the training signal is excessive, the excessive dimension may be effectively used. For example, in a case where the two APs perform the 3 × 3 joint Tx using a total of four antennas, the remaining one dimension may be used for link level measurement with a certain STA. In this case, different transmission weights are applied to the EHT-LTFs #1 to #3 and the EHT-LTF#4.

In addition, EHT-LTFs using different subcarriers may be generated and transmitted between APs that perform the coordinated transmission. In this way, the SINR is hardly affected by the synchronization or frequency deviation between the APs, so that the factor of the decrease in the SINR can be limited to deviation in orthogonality between the channel and the transmission weight.

Note that, in the Coordination TRN frame, information of the Coordination TRN Announcement frame may be included in the SIG as in the MU PPDU. In that case, sending of the Coordination TRN Announcement frame may be skipped.

### <Processing of STA>

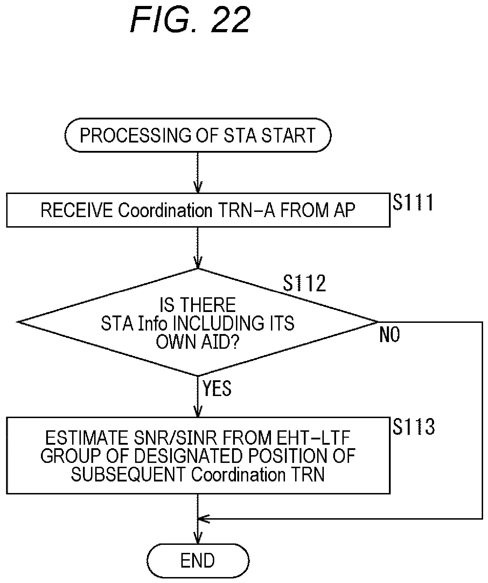

Fig. 22 is a flowchart illustrating processing of the STA in the second embodiment.

Note that the processing of Fig. 22 is processing performed by the communication control unit 155 of the STA controlling each unit of the wireless communication unit 131.

In step S111, the communication control unit 155 receives a Coordination TRN-A (Announcement) frame from the AP.

In step S112, the communication control unit 155 determines whether or not STA Info including its own AID exists in the received Coordination TRN-A frame. In a case where it is determined in step S112 that STA Info including its own AID exists in the received Coordination TRN-A frame, the processing proceeds to step S113.

In step S113, the communication control unit 155 measures a signal-to-noise ratio (SNR) or SINR by using the EHT-LTF group of the designated position of the subsequent Coordination TRN (the position designated by the TRN ID Bitmap). Thereafter, the measurement result of the SINR for each EHT-LTF specified by the Coordination TRN is transmitted to the AP as a frame of the Coordination SINR Feedback Element, and the processing of Fig. 22 ends.

In a case where it is determined in step S112 that STA Info including its own AID does not exist in the received coordination TRN-A frame, the processing of Fig. 22 ends.

### <Effects of Second Embodiment>

As described above, as in the second embodiment, similarly to the first embodiment, it is possible to optimize the modulation scheme at the time of the coordinated transmission and determine possibility of the coordinated transmission can be performed in a short time, and improvement of the system throughput can be expected.

In the second embodiment, the measurement of the communication quality using the training signal is performed before the coordinated transmission. Thus, it is possible to select an optimal MCS at the time of the coordinated transmission and determine possibility of the coordinated transmission can be performed.

According to the second embodiment, in comparison with the first embodiment, an overhead due to measurement occurs, but it is still possible to measure a plurality of combinations in a time (for example, joint Tx of four spatial streams (SSs) with two APs and four STAs is about 150 us) shorter than the time (3 ms to 4 ms) required for the Sounding processing.

Furthermore, in the second embodiment, the training signal for each combination of the coordination scheme and the destination STA can be transmitted while, in the first embodiment, only the training signal of one combination of the information regarding coordination (the coordination scheme and the destination STA) is transmitted.

Note that the first embodiment and the second embodiment described above can be selectively used depending on the situation or can be simultaneously performed.

For example, in a situation where channel fluctuation is severe and orthogonality between a channel and a transmission weight is likely to collapse, the second embodiment in which training is performed before the coordinated transmission is desirable.

On the other hand, in a situation where the channel fluctuation is not so severe and the orthogonality between the channel and the transmission weight is unlikely to collapse, the first embodiment in which training is performed simultaneously with coordinated data transmission is desirable. In addition, the use of the first embodiment and the second embodiment may be determined by an algorithm mounted on the AP or may be determined by user setting.

### <3. Others>

### <Modifications>

Note that, in the above description, an example has been described in which the training signal for each combination of the coordination scheme and the destination STA, which is information regarding the coordinated transmission, is transmitted, but the present technology is also applied to a case where the training signal for each coordination scheme or the training signal for (each combination of) the destination STA is transmitted.

In addition, although the present embodiment has been described focusing on the wireless LAN, the present technology is not limited to the wireless LAN. For example, the present technology is also applicable to coordinated scheduling in Coordination Of Multi-Point (CoMP) of the 3rd Generation Partnership Project (3GPP) (registered trademark).

### <Effects of Present Technology>

In the present technology, the communication control device (STA) controls processing of receiving signals to be subjected to coordinated transmission by a plurality of communication devices, and processing related to communication on the basis of a training signal prepared for each piece of coordinated transmission information which is information regarding the coordinated transmission.

Furthermore, in the present technology, the communication control device (AP) controls processing of performing coordinated transmission with another communication device, and processing of transmitting a training signal prepared for each piece of coordinated transmission information that is information regarding the coordinated transmission to a terminal.

Therefore, according to the present technology, it is possible to optimize the modulation scheme at the time of the coordinated transmission and determine possibility of the coordinated transmission is possible in a short time, and improvement in the system throughput can be expected.

According to the first embodiment of the present technology, for example, SINR measurement can be performed with low overhead by serving as both a coordinated transmission packet and training.

According to the second embodiment of the present technology, for example, by performing training in advance before the coordinated transmission, it is possible to select an optimal MCS and determine possibility of the coordinated transmission is possible at the time of the coordinated transmission.

### <Configuration Example of Computer>

The series of processing steps described above can be executed by hardware and also can be executed by software. In a case where the series of processing steps is executed by software, a program included in the software is installed from a program recording medium on a computer incorporated in dedicated hardware, a general-purpose personal computer, or the like.

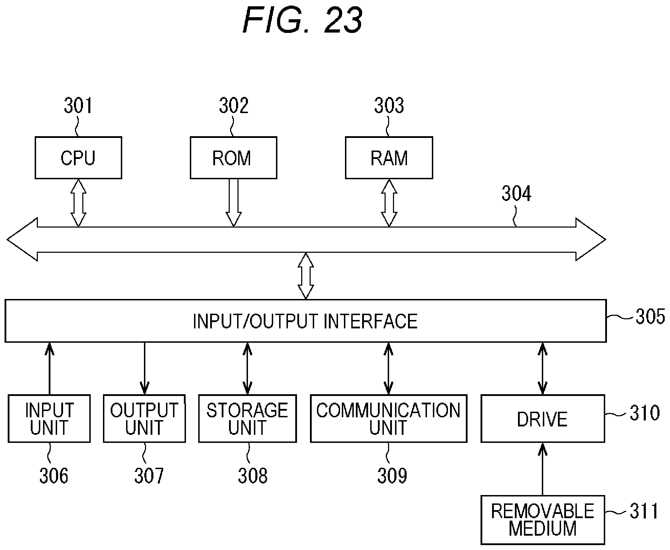

Fig. 23 is a block diagram illustrating a configuration example of hardware of a computer that executes the above-described series of processing by a program.

A central processing unit (CPU) 301, a read only memory (ROM) 302, and a random access memory (RAM) 303 are connected to each other by a bus 304.

Moreover, to the bus 304, an input/output interface 305 is connected. To the input/output interface 305, an input unit 306 including a keyboard, a mouse, and the like, and an output unit 307 including a display, a speaker, and the like are connected. Furthermore, to the input/output interface 305, a storage unit 308 including a hard disk, a nonvolatile memory, and the like, a communication unit 309 including a network interface and the like, and a drive 310 that drives a removable medium 311 are connected.

In the computer configured as described above, the above-described series of processing steps is executed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting, and is installed on the storage unit 308.

Note that the program executed by the computer may be a program that performs processing in a time-series manner in the order described in the present specification, or may be a program that performs processing in parallel or at necessary timing such as when a call is made.

### <Application Examples>

The present technology can be applied to various products. For example, the wireless communication device 11 in Fig. 2 and the wireless communication device 111 in Fig. 3 may be implemented as a mobile terminal such as a smartphone, a tablet personal computer (PC), a notebook PC, a portable game terminal, or a digital camera, a fixed terminal such as a television receiver, a printer, a digital scanner, or a network storage, or an in-vehicle terminal such as a car navigation device. In addition, the wireless communication device 11 and the wireless communication device 111 may be implemented as a machine to machine communication (M2M) terminal such as a smart meter, a vending machine, a remote monitoring device, or a point of sale (POS) terminal. Moreover, the wireless communication device 11 and the wireless communication device 111 may each be a wireless communication module (for example, an integrated circuit module including one die) mounted on these terminals.

On the other hand, for example, the wireless communication device 11 and the wireless communication device 111 may be implemented as a wireless LAN AP (wireless base station) having a router function or not having a router function. In addition, the wireless communication device 11 and the wireless communication device 111 may be implemented as mobile wireless LAN routers. Moreover, the wireless communication device 11 and the wireless communication device 111 may be wireless communication modules (for example, an integrated circuit module including one die) mounted on these devices.

### <Configuration Example of Smartphone>

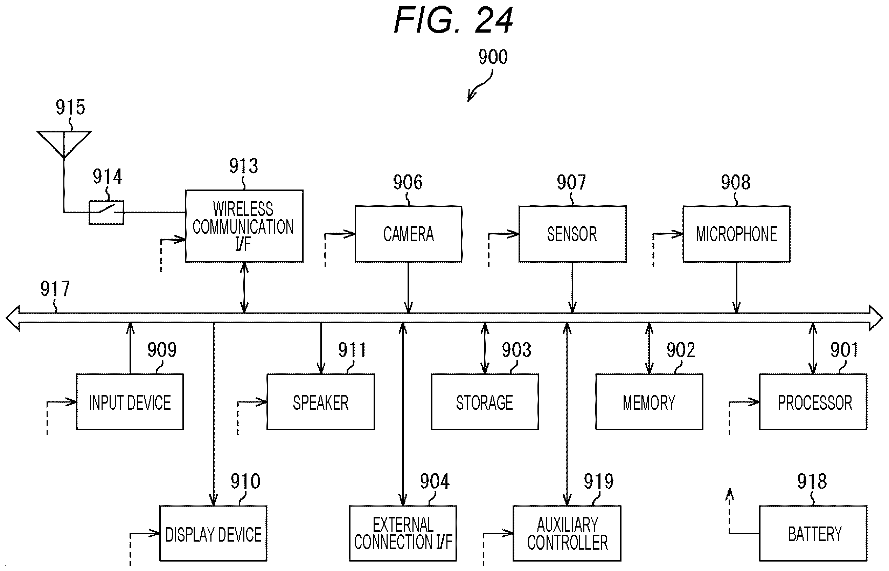

Fig. 24 is a block diagram illustrating a schematic configuration example of the smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores a program to be executed by the processor 901, and data.

The storage 903 may include a storage medium such as a semiconductor memory or a hard disk.

The external connection interface 904 is an interface for connecting an external device such as a memory card or a universal serial bus (USB) device to the smartphone 900.

The camera 906 includes an imaging element such as a charge coupled device (CCD) or a complementary metal oxide semiconductor (CMOS), for example, and generates a captured image.

The sensor 907 includes, for example, a sensor group including a positioning sensor, a gyro sensor, a geomagnetic sensor, an acceleration sensor, and the like.

The microphone 908 converts audio input to the smartphone 900 into an audio signal.

The input device 909 includes, for example, a touch sensor that detects a touch on a screen of the display device 910, a keypad, a keyboard, a button, a switch, or the like and receives an operation by the user or information input from the user.

The display device 910 has a screen such as a liquid crystal display (LCD) or an organic light emitting diode (OLED) display, and converts the audio signal output from the smartphone 900 into audio.

The wireless communication interface 913 supports one or more of wireless LAN standards such as IEEE 802.11a, 11b, 11g, 11ac, and 11ad, and performs wireless communication.

The wireless communication interface 913 communicates with other devices via the wireless LAN AP in an infrastructure mode. Furthermore, the wireless communication interface 913 directly communicates with other devices in an ad hoc mode or a direct communication mode such as Wi-Fi Direct.

Note that, in Wi-Fi Direct, unlike the ad hoc mode, one of two terminals operates as an AP, but communication is directly performed between the terminals.

The wireless communication interface 913 typically includes a baseband processor, a radio frequency (RF) circuit, a power amplifier, and the like. The wireless communication interface 913 may be a one-chip module in which a memory that stores a communication control program, a processor that executes the program, and related circuits are integrated.

In addition to the wireless LAN scheme, the wireless communication interface 913 may support other types of wireless communication schemes such as a short-range wireless communication scheme, a proximity wireless communication scheme, and a cellular communication scheme.

The antenna switch 914 switches a connection destination of the antenna 915 among a plurality of circuits (for example, circuits for different wireless communication schemes) included in the wireless communication interface 913.

The antenna 915 has a single or a plurality of antenna elements (for example, a plurality of the antenna elements forming a multiple input multiple output (MIMO) antenna), and is used for transmission and reception of a wireless signal by the wireless communication interface 913.

Note that the smartphone 900 is not limited to the example in Fig. 27, and may include a plurality of the antennas (for example, an antenna for the wireless LAN, an antenna of the proximity wireless communication scheme, and the like). In that case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies power to each block of the smartphone 900 illustrated in Fig. 24 through a feed line partially illustrated by a broken line in the drawing. The auxiliary controller 919 causes operation of minimum necessary functions of the smartphone 900, for example, in a sleep mode.

In the smartphone 900 illustrated in Fig. 24, the communication control unit 55 described above with reference to Fig. 2, for example, may be implemented in the wireless communication interface 913. In addition, at least some of these functions may be implemented in the processor 901 or the auxiliary controller 919.

Note that the smartphone 900 may operate as a wireless AP (software AP) when the processor 901 executes an AP function at an application level. In addition, the wireless communication interface 913 may have the wireless AP function.

Moreover, the smartphone 900 may include a biometric authentication unit (fingerprint authentication, palm-shape authentication, voice authentication, blood vessel authentication, face authentication, iris authentication, and retina authentication). At that time, the wireless communication interface 913 in which the communication control unit 55 described above with reference to Fig. 2 is implemented is configured to receive power supply from the same battery 918 as at least one of the display device 910, the speaker 911, or the biometric authentication unit.

Furthermore, in the smartphone 900, information is displayed from at least one of the display device 910 or the speaker 911 on the basis of communication with an external device through the wireless communication interface 913. At that time, a result of synchronization according to the present technology may be output as information from at least one of the display device 910 or the speaker 911.

### <Configuration Example of In-Vehicle Device>

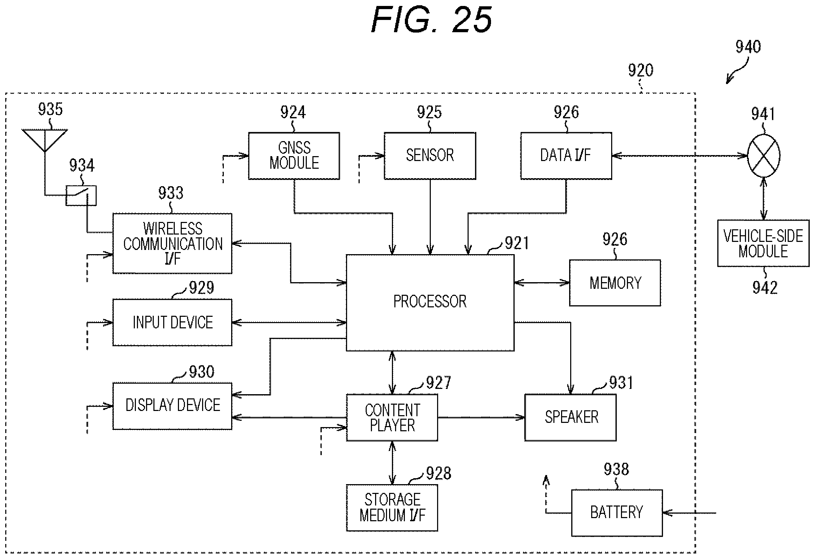

Fig. 25 is a block diagram illustrating a schematic configuration example of an in-vehicle device 920 to which the present technology is applied.

The in-vehicle device 920 includes a processor 921, a memory 922, a global navigation satellite system (GNSS) module 924, a sensor 925, a data interface 926, a content player 927, and a storage medium interface 928. Furthermore, the in-vehicle device 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle device 920. Furthermore, the processor 921 can also control a drive system of a vehicle, such as a brake, an accelerator, or a steering, on the basis of information obtained through communication based on the present technology.

The memory 922 includes a RAM and a ROM, and stores a program to be executed by the processor 921, and data.

The GNSS module 924 uses a GNSS signal received from a GNSS satellite to measure a location (for example, latitude, longitude, and altitude) of the in-vehicle device 920.

The sensor 925 includes, for example, a sensor group including a gyro sensor, a geomagnetic sensor, an air pressure sensor, and the like.

The data interface 926 is connected to an in-vehicle network 941 via, for example, a terminal (not illustrated), and acquires data generated on the vehicle side, such as in-vehicle data.

The content player 927 reproduces contents stored in a storage medium (for example, a CD or a DVD) inserted into the storage medium interface 928.

The input device 929 includes, for example, a touch sensor that detects a touch on a screen of the display device 930, a button, a switch, or the like, and receives an operation by the user or information input from the user.

The display device 930 has a screen such as an LCD or an OLED display, and displays an image of a navigation function or contents to be reproduced.

The speaker 931 outputs sound of the navigation function or contents to be reproduced.

Note that, in the in-vehicle device 920, the navigation function and the function of the content player 927 are optional. The navigation function and the content player 927 may be removed from the configuration of the in-vehicle device 920.

The wireless communication interface 933 supports one or more of wireless LAN standards such as IEEE 802.11a, 11b, 11g, 11n, 11ac, 11ad, 11ax, and 11be, and performs wireless communication. The wireless communication interface 933 communicates with other devices via the wireless LAN AP in the infrastructure mode. Furthermore, the wireless communication interface 933 directly communicates with other devices in the ad hoc mode or the direct communication mode such as Wi-Fi Direct.

The wireless communication interface 933 typically includes a baseband processor, a RF circuit, a power amplifier, and the like. The wireless communication interface 933 may be a one-chip module in which a memory that stores a communication control program, a processor that executes the program, or related circuits are integrated. In addition to the wireless LAN scheme, the wireless communication interface 933 may support other types of wireless communication schemes such as a short-range wireless communication scheme, a proximity wireless communication scheme, and a cellular communication scheme.

The antenna switch 934 switches a connection destination of the antenna 935 among a plurality of circuits included in the wireless communication interface 933.

The antenna 935 has a single or a plurality of antenna elements, and is used for transmission and reception of a wireless signal through the wireless communication interface 933.

Note that the in-vehicle device 920 is not limited to the example in Fig. 25, and may include a plurality of the antennas 935. In that case, the antenna switch 934 may be omitted from the configuration of the in-vehicle device 920.

In the in-vehicle device 920 illustrated in Fig. 25, the battery 938 may supply power through a feed line partially illustrated by a broken line in the drawing, and for example, the communication control unit 55 described with reference to Fig. 2 may be mounted in the wireless communication interface 933. In addition, at least some of these functions may be implemented in the processor 921.

In addition, the wireless communication interface 933 may operate as the wireless communication device 11 described above and provide wireless connection to a terminal possessed by a user in the vehicle.

Furthermore, the present technology may be implemented as an in-vehicle system (or vehicle) 940 including one or more blocks of the in-vehicle device 920 described above, the in-vehicle network 941, and a vehicle-side module 942. The vehicle-side module 942 generates vehicle-side data such as a vehicle speed, an engine speed, or failure information, and outputs the generated data to the in-vehicle network 941.

### <Configuration Example of Wireless AP>

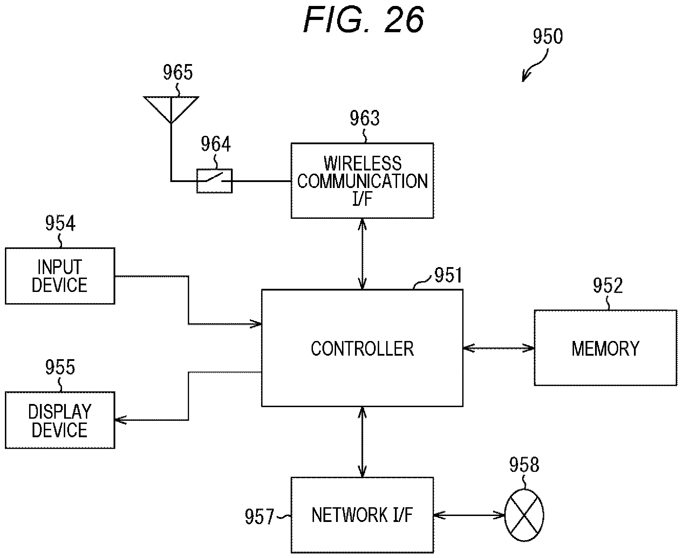

Fig. 26 is a block diagram illustrating a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (for example, access restriction, routing, encryption, firewall, log management, and the like) of the Internet protocol (IP) layer and higher layer of the wireless AP 950.

The memory 952 includes a RAM and a ROM, and stores a program to be executed by the controller 951 and various control data (for example, a terminal list, a routing table, an encryption key, a security setting, a log, and the like).

The input device 954 includes, for example, a button, a switch, and the like and receives an operation from the user.

The display device 955 includes an LED lamp and the like, and displays an operation status of the wireless AP 950.

The network interface 957 is a wired communication interface for connecting the wireless AP 950 to a wired communication network 958. The network interface 957 may have a plurality of connection terminals. The wired communication network 958 may be a LAN such as Ethernet (registered trademark), or may be a wide area network (WAN) .

The wireless communication interface 963 supports one or more of the wireless LAN standards such as IEEE 802.11a, 11b, 11g, 11n, 11ac, and 11ad, and provides wireless connection as an AP to a nearby terminal.

The wireless communication interface 963 typically includes a baseband processor, a RF circuit, a power amplifier, and the like.

The wireless communication interface 963 may be a one-chip module in which a memory that stores a communication control program, a processor that executes the program, or related circuits are integrated.

The antenna switch 964 switches a connection destination of the antenna 965 among a plurality of circuits included in the wireless communication interface 963, and the antenna 965 has a single or a plurality of antenna elements and is used for transmission and reception of a wireless signal through the wireless communication interface 963.

In the wireless AP 950 illustrated in Fig. 26, for example, the communication control unit 55 described with reference to Fig. 2 may be implemented in the wireless communication interface 963. In addition, at least some of these functions may be implemented in the controller 951.

Note that, the above-described embodiments describe an example for embodying the present technology, and there is a correspondence relationship between the matters in the embodiments and the matters specifying the invention in claims. Similarly, there is a correspondence relationship between the matters specifying the invention in claims and the matters in the embodiments of the present technology having the same names. However, the present technology is not limited to the embodiments, and can be embodied by applying various modifications to the embodiments without departing from the scope of the present technology.

In addition, the procedures described in the above-described embodiment may be considered as a method including a series of procedures and may be considered as a program for causing this computer to execute the series of procedures and a recording medium that stores the program.

As this recording medium, for example, a compact disc (CD), a MiniDisc (MD), a digital versatile disc (DVD), a memory card, a Blu-ray (registered trademark) Disc, and the like can be used.

Note that, in the present specification, a system means an assembly of a plurality of components (devices, modules (parts), and the like), and it does not matter whether or not all the components are located in the same housing. Therefore, a plurality of devices housed in separate housings and connected to each other via a network and one device in which a plurality of modules is housed in one housing are both systems.

In addition, the effects described in the present specification are merely examples and not restrictive, and there may also be other effects.

An embodiment of the present technology is not limited to the embodiment described above, and various modifications can be made without departing from the scope of the present technology.

For example, the present technology may be configured as cloud computing in which one function is shared by a plurality of devices via a network and processed in cooperation.

Furthermore, each step described in the above-described flowcharts can be executed by one device, or can be executed in a shared manner by a plurality of devices.

Moreover, in a case where a plurality of processes is included in one step, the plurality of processes included in the one step can be executed in a shared manner by a plurality of devices in addition to being executed by one device.

### <Combination Example of Configuration>

The present technology can also be configured as follows.
(1) A communication control device including:
   a communication control unit that controls processing of receiving signals to be subjected to coordinated transmission by a plurality of communication devices, and processing related to communication on the basis of a training signal prepared for each piece of coordinated transmission information that is information regarding the coordinated transmission.
(2) The communication control device according to (1), in which
   the coordinated transmission information includes at least one of information indicating a coordination scheme or information indicating a destination terminal.
(3) The communication control device according to (1) or (2), in which
   the communication control unit performs control to generate communication quality information that is information indicating communication quality based on the training signal and transmit the communication quality information to another communication device.
(4) The communication control device according to (3), in which
   the communication control unit performs control to include the communication quality information in a response signal and transmit the response signal in a case where the training signal is included in a data signal to be subjected to the coordinated transmission.
(5) The communication control device according to (3), in which
   in a case where the training signal transmitted at a timing different from the coordinated transmission of the data signal is received, the communication control unit selects the training signal of a predetermined position and measures communication quality.
(6) The communication control device according to (5), in which
   the communication control unit selects the training signal of the predetermined position on the basis of information included in an announcement signal received in advance.
(7) The communication control device according to (5), in which
   the communication control unit selects the training signal of the predetermined position on the basis of header information of the training signal.
(8) The communication control device according to (5), in which
   the communication control unit performs control to transmit the communication quality information for each piece of the coordinated transmission information corresponding to the training signal.
(9) The communication control device according to any one of (1) to (8), in which
   the training signal is transmitted by applying a transmission weight prepared for each piece of the coordinated transmission information.
(10) A communication control method including:
   controlling, by a communication control device, processing of receiving signals to be subjected to coordinated transmission by a plurality of communication devices, and processing related to communication on the basis of a training signal prepared for each piece of coordinated transmission information that is information regarding the coordinated transmission.
(11) A communication control device including:
   a communication control unit that controls processing of performing coordinated transmission with another communication device, and processing of transmitting a training signal prepared for each piece of coordinated transmission information that is information regarding the coordinated transmission to a terminal.
(12) The communication control device according to (11), in which
   the coordinated transmission information includes at least one of information indicating a coordination scheme or information indicating a destination terminal.
(13) The communication control device according to (11) or (12), in which
   the communication control unit requests the another communication device to perform coordinated transmission of the training signal.
(14) The communication control device according to (13), in which
   the communication control unit transmits a signal requesting coordinated transmission of the training signal by including, in the signal, information regarding another terminal that is difficult to perform the coordinated transmission with a terminal desired as a transmission destination of the coordinated transmission.
(15) The communication control device according to (14), in which
   the communication control unit includes the training signal in a data signal to be subjected to the coordinated transmission.
(16) The communication control device according to (15), in which
   the communication control unit adds information requesting measurement of communication quality to a PHY header of the data signal.
(17) The communication control device according to (11) or (12), in which
   the communication control unit performs control to transmit the training signal at a timing different from the coordinated transmission of the data signal.
(18) The communication control device according to (17), in which
   the communication control unit transmits, to the terminal, an announcement signal notifying of transmission of the training signal in advance.
(19) The communication control device according to any one of (11) to (18), in which
   the communication control unit determines a modulation scheme, a coding scheme, and possibility of coordinated transmission on the basis of the communication quality information fed back from the terminal.
(20) The communication control device according to (19), in which
   the communication control unit notifies the another communication device of possibility of coordinated transmission for the terminal belonging to a cell of the communication control device.
(21) The communication control device according to (19), in which
   the communication control unit determines possibility of coordinated transmission on the basis of whether or not the communication quality indicated by the communication quality information exceeds a predetermined communication quality.
(22) The communication control device according to any one of (12) to (21), in which
   in a case where the another communication device has acquired a transmission right, the communication control unit transmits a data signal without performing coordinated transmission when the information indicating the destination terminal is included in the coordinated transmission information and information indicating the terminal to which the communication control device desires transmission is not included in the information indicating the destination terminal.
(23) The communication control device according to any one of (11) to (22), in which
   the training signal is transmitted by applying a transmission weight prepared for each piece of the coordinated transmission information.
(24) A communication control method including:
   controlling, by a communication control device, processing of performing coordinated transmission with another communication device, and processing of transmitting a training signal prepared for each piece of coordinated transmission information that is information regarding the coordinated transmission to a terminal.

### REFERENCE SIGNS LIST

- 1: Wireless communication system
- 11: Communication device
- 31: Wireless communication unit
- 32: Control unit
- 33: Storage unit
- 34: WAN communication unit
- 41: Antenna
- 51: Amplification unit
- 52: Wireless interface unit
- 53: Signal processing unit
- 54: Data processing unit
- 55: Communication control unit
- 56: Communication storage unit
- 111: Communication device
- 131: Wireless communication unit
- 132: Control unit
- 133: Storage unit
- 134: WAN communication unit
- 141: Antenna
- 151: Amplification unit
- 152: Wireless interface unit
- 153: Signal processing unit
- 154: Data processing unit
- 155: Communication control unit
- 156: Communication storage unit

## Claims

1. A communication control device comprising:
a communication control unit that controls processing of receiving signals to be subjected to coordinated transmission by a plurality of communication devices, and processing related to communication on a basis of a training signal prepared for each piece of coordinated transmission information that is information regarding the coordinated transmission.

2. The communication control device according to claim 1, wherein
the coordinated transmission information includes at least one of information indicating a coordination scheme or information indicating a destination terminal.

3. The communication control device according to claim 1, wherein
the communication control unit performs control to generate communication quality information that is information indicating communication quality based on the training signal and transmit the communication quality information to another communication device.

4. The communication control device according to claim 3, wherein
the communication control unit performs control to include the communication quality information in a response signal and transmit the response signal in a case where the training signal is included in a data signal to be subjected to the coordinated transmission.

5. The communication control device according to claim 3, wherein
in a case where the training signal transmitted at a timing different from the coordinated transmission of the data signal is received, the communication control unit selects the training signal of a predetermined position and measures communication quality.

6. The communication control device according to claim 5, wherein
the communication control unit selects the training signal of the predetermined position on a basis of information included in an announcement signal received in advance.

7. The communication control device according to claim 5, wherein
the communication control unit selects the training signal of the predetermined position on a basis of header information of the training signal.

8. The communication control device according to claim 5, wherein
the communication control unit performs control to transmit the communication quality information for each piece of the coordinated transmission information corresponding to the training signal.

9. The communication control device according to claim 1, wherein
the training signal is transmitted by applying a transmission weight prepared for each piece of the coordinated transmission information.

10. A communication control method comprising:
controlling, by a communication control device, processing of receiving signals to be subjected to coordinated transmission by a plurality of communication devices, and processing related to communication on a basis of a training signal prepared for each piece of coordinated transmission information that is information regarding the coordinated transmission.

11. A communication control device comprising:
a communication control unit that controls processing of performing coordinated transmission with another communication device, and processing of transmitting a training signal prepared for each piece of coordinated transmission information that is information regarding the coordinated transmission to a terminal.

12. The communication control device according to claim 11, wherein
the coordinated transmission information includes at least one of information indicating a coordination scheme or information indicating a destination terminal.

13. The communication control device according to claim 11, wherein
the communication control unit requests the another communication device to perform coordinated transmission of the training signal.

14. The communication control device according to claim 13, wherein
the communication control unit transmits a signal requesting coordinated transmission of the training signal by including, in the signal, information regarding another terminal that is difficult to perform the coordinated transmission with a terminal desired as a transmission destination of the coordinated transmission.

15. The communication control device according to claim 14, wherein
the communication control unit includes the training signal in a data signal to be subjected to the coordinated transmission.

16. The communication control device according to claim 15, wherein
the communication control unit adds information requesting measurement of communication quality to a PHY header of the data signal.

17. The communication control device according to claim 11, wherein
the communication control unit performs control to transmit the training signal at a timing different from the coordinated transmission of the data signal.

18. The communication control device according to claim 17, wherein
the communication control unit transmits, to the terminal, an announcement signal notifying of transmission of the training signal in advance.

19. The communication control device according to claim 11, wherein
the training signal is transmitted by applying a transmission weight prepared for each piece of the coordinated transmission information.

20. A communication control method comprising:
controlling, by a communication control device, processing of performing coordinated transmission with another communication device, and processing of transmitting a training signal prepared for each piece of coordinated transmission information that is information regarding the coordinated transmission to a terminal.
